# EUROPÄISCHE PATENTSCHRIFT

(11) **EP 3 098 097 B1**
(45) Veröffentlichungstag und Bekanntmachung des Hinweises auf die Patenterteilung: **16.10.2019**
(21) Anmeldenummer: 16172055.2
(22) Anmeldetag: 30.05.2016
(51) Int. Cl.: B60D 1/54, B60D 1/06

(54) **ANHÄNGEKUPPLUNG**
TRAILER COUPLING
ATTELAGE

(30) Priorität: 29.05.2015 DE 102015108574; 20.05.2016 DE 102016109379
(43) Veröffentlichungstag der Anmeldung: 30.11.2016
(73) Patentinhaber: WESTFALIA - Automotive GmbH, 33378 Rheda-Wiedenbrück (DE)
(72) Erfinder: Hetfleisch, Raimund, 33129 Delbrück-Boke (DE)
(74) Vertreter: Patentanwälte Bregenzer und Reule Partnerschaftsgesellschaft mbB

(56) Entgegenhaltungen:
- EP-A1- 2 650 149
- EP-A2- 2 829 422

## Beschreibung

Die Erfindung betrifft eine Anhängekupplung für ein Kraftfahrzeug mit einem Kupplungsarm gemäß dem Oberbegriff des Anspruchs 1.

Eine derartige Anhängekupplung ist beispielsweise in EP 2 829 422 A2 erläutert.

Bei einer aus DE 10 2013 007 114 A1 bekannten Anhängekupplung ist das Kupplungsarmlagerelement am Halter um mehrere Achsen, beispielsweise zwei Achsen, schwenkbar gelagert. Das Kupplungsarmlagerelement ist am Außenumfang einer wellenartigen Halterlageraufnahme schwenkbar um die Schwenkachse gelagert, nämlich anhand eines zwischen der Halterlageraufnahme und dem Kupplungsarmlagerelement angeordneten weiteren Lagerkörpers.

Es ist daher die Aufgabe der vorliegenden Erfindung, ein verbessertes Montagekonzept für eine Anhängekupplung vorzuschlagen.

Zur Lösung der Aufgabe ist eine Anhängekupplung gemäß der technischen Lehre des Anspruchs 1 vorgesehen.

Eine derartige Verrastung ist sehr leicht herstellbar, was die Montage der Anhängekupplung erheblich erleichtert. Beispielsweise sind Verschraubungen, Verklebungen oder dergleichen zwar zusätzlich zu der Rastanordnung vorteilhaft, jedoch nicht unbedingt notwendig.

Die Lagerkomponente und/oder das mindestens eine Bauteil sind beispielsweise beim Fahrbetrieb der Anhängekupplung, d.h. bei angehängtem Anhänger, durch bei dem Fahrbetrieb auftretende Kräfte, zum Beispiel Zugkräfte und/oder Stützkräfte, belastete Bauteile. Die Lagerkomponente und das mindestens eine Bauteil können aber auch beim Verstellen der Anhängekupplung zwischen der Gebrauchsstellung und der Nichtgebrauchstellung Kraft aufnehmende Komponenten der Anhängekupplung sein. Bevorzugt ist es, wenn in der Fixierstellung der Fixiereinrichtung die Rastanordnung keine im Sinne eines Lösens der Verrastung wirkende Kräfte aufnehmen muss. Es versteht sich, dass mehrere durch Rastanordnungen im Sinne der Erfindung verbundene Komponenten bei der Anhängekupplung vorgesehen sein können.

Die Rastanordnung kann zusätzliche Funktionen erfüllen, was nachfolgend deutlich wird.

Vorteilhaft ist vorgesehen, dass die Lagerkomponente und das mindestens eine Bauteil drehbar und/oder verschieblich anhand der Rastanordnung miteinander verbunden sind. Somit können beispielsweise das Bauteil und die Lagerkomponente relativ zueinander drehen oder relativ zueinander verschoben werden. Die Rastanordnung lässt also mindestens einen Bewegungsfreiheitsgrad der Lagerkomponente und des mindestens einen Bauteils relativ zueinander zu. So können beispielsweise die Lagerkomponente und die zweite Lagerkomponente anhand der Rastanordnung mit mindestens einem Bewegungsfreiheitsgrad relativ zueinander beweglich verbunden sein.

Ein vorteilhaftes Konzept sieht vor, dass die Rastanordnung das Bauteil, insbesondere das Kupplungsarmlagerelement, an der Lagerkomponente, insbesondere der Halterlageraufnahme bezüglich Lagerachse, insbesondere der Schwenkachse, verschiebefest hält oder einen Verschiebeweg des Bauteils und der Lagerkomponente bezüglich der Lagerachse begrenzt. So kann der Verschiebeweg, entlang dessen das Bauteil und die Lagerkomponente relativ zueinander verschieblich sind, begrenzt sein oder überhaupt nicht vorhanden sein. Der Verschiebeweg erstreckt sich zweckmäßigerweise entlang einer Steckachse, entlang derer das Bauteil und die Lagerkomponente aneinander ansteckbar sind.

Das Kupplungsarmlagerelement ist an der Halterlageraufnahme vorteilhaft um eine Schiebeachse verschieblich und/oder eine Schwenkachse schwenkbar gelagert.

Ein weiteres, eine im Zusammenhang mit dem Oberbegriff des Anspruchs 1 an sich eigenständige Erfindung darstellendes Konzept oder eine vorteilhafte Ausgestaltung der Erfindung sieht vor, dass das Kupplungsarmlagerelement an der Halterlageraufnahme anhand einer Rastanordnung gehalten ist. Beispielsweise bildet das Kupplungsarmlagerelement die Lagerkomponente und die Halterlageraufnahme das mindestens eine Bauteil oder umgekehrt.

Die Rastanordnung kann die erste und die zweite Lagerkomponente, also beispielsweise das Kupplungsarmlagerelement an der Halterlageraufnahme, bezüglich der mindestens einen Lagerachse oder Schwenkachse verschiebefest halten. Mithin ist also das Kupplungsarmlagerelement an der Halterlageraufnahme nur schwenkbar, jedoch nicht entlang der Lagerachse oder Schwenkachse verschieblich.

Ein weiteres Konzept kann aber auch vorsehen, dass die Rastanordnung das Kupplungsarmlagerelement an der Halterlageraufnahme bezüglich der mindestens einen Lagerachse oder Schwenkachse verschieblich hält oder eine Verschieblichkeit zulässt. In diesem Fall ist es jedoch vorteilhaft, wenn die Rastanordnung einen Verschiebeweg des Kupplungsarmlagerelements bezüglich der Halterlageraufnahme bezüglich der mindestens einen Lagerachse, insbesondere der Schwenkachse, begrenzt. Somit kann das Kupplungsarmlagerelement relativ zur Halterlageraufnahme zwar entlang der Lagerachse, also beispielsweise einer Schwenkachse, die insoweit eine Schiebeachse darstellt, verschoben werden, jedoch nur bezüglich des Verschiebewegs. Beispielsweise könnte eine Rastaufnahme breiter als der in die Rastaufnahme eingreifende Rastvorsprung ausgestaltet sein, um so eine Verschieblichkeit entlang der mindestens einen Lagerachse oder Schwenkachse zu ermöglichen.

In Bezug auf die Verrastung sind verschiedene Varianten denkbar, von denen nachfolgend einige vorgestellt werden.

Die Rastanordnung umfasst beispielsweise einen Rastvorsprung und eine Rastaufnahme, die ineinander eingreifen. Es können mehrere Rastvorsprünge vorgesehen sein, beispielsweise um die mindestens eine Lagerachse oder Schwenkachse herum nebeneinander angeordnete Rastvorsprünge. Ferner können auch mehrere Rastaufnahmen vorgesehen sein, beispielsweise um die mindestens einen Lagerachse, insbesondere die Schwenkachse, herum nebeneinander angeordnete Rastaufnahmen. Die Rastvorsprünge können beispielsweise in der Art eines Kamms oder Flansches nach radial außen vor die eine Lagerkomponente, beispielsweise das Kupplungsarmlagerelement, vorstehen und in eine am Innenumfang der anderen Lagerkomponente, beispielsweise der Halterlageraufnahme, vorgesehene Rastaufnahme eingreifen.

Zweckmäßigerweise kann auch vorgesehen sein, dass die Rastanordnung mindestens einen Sprengring aufweist. Zweckmäßigerweise bildet der Sprengring den Rastvorsprung.

Bevorzugt ist es, wenn der mindestens eine Rastvorsprung einen Lagervorsprung bildet und in die mindestens eine als Lageraufnahme ausgestaltete Rastaufnahme eingreift, diese also eine Lageraufnahme bildet. Somit tragen der Rastvorsprung und die Lageraufnahme sozusagen zur Lagerung des Kupplungsarmlagerelements an der Halterlageraufnahme bei. Beispielsweise ist die Lageraufnahme als eine Lagernut, beispielsweise eine im Querschnitt U-förmige Nut ausgestaltet.

Zweckmäßigerweise sind der Rastvorsprung und die Rastaufnahme oder ist die Rastanordnung in einem Innenraum des Schwenklagers angeordnet, also zwischen aneinander gelagerten Bereichen des Kupplungsarmlagerelements und der Halterlageraufnahme.

Es ist aber auch möglich, dass die Verrastung außerhalb der direkt aufeinander gelagerten Bereiche der ersten und zweiten Lagerkomponente, also beispielsweise des Kupplungsarmlagerelements und der Halterlageraufnahme, vorgesehen ist. Beispielsweise kann die Verrastung oder Rastanordnung neben den aufeinander angeordneten, beispielsweise aufeinander gleitenden, Lagerabschnitten der Halterlageraufnahme und des Kupplungsarmlagerelements bezüglich der mindestens einen Lagerachse des Lagers, insbesondere bezüglich der Schwenkachse des Schwenklagers, vorgesehen sein. Es ist zum Beispiel möglich, dass das Kupplungsarmlagerelement stirnseitig an einem Rastvorsprung anliegt, der vor die Halterlageraufnahme nach radial innen oder radial außen vorsteht.

An dieser Stelle sei festgehalten, dass das Kupplungsarmlagerelement mit seinem Lagerabschnitt in eine beispielsweise als Lageröffnung ausgestaltete Halterlageraufnahme des Lagers eingreifen kann. Das Kupplungsarmlagerelement bildet dann sozusagen die innere Komponente, die Halterlageraufnahme die äußere Komponente des Schwenklagers.

Es ist aber auch eine umgekehrte Konfiguration möglich, bei der die Halterlageraufnahme die innere Komponente des Schwenklagers darstellt, beispielsweise einen Lagerbolzen umfasst, der in eine Lageraufnahme des Kupplungsarmlagerelements eingreift. Somit ist das Kupplungsarmlagerelement die äußere Komponente.

Bevorzugt ist ein Konzept, bei der der Rastvorsprung einen Sprengring umfasst oder dadurch gebildet ist, der in die zugeordnete Rastaufnahme, die in diesem Fall zweckmäßigerweise eine Lageraufnahme ist, eingreift.

Vorteilhaft ist vorgesehen, dass die Lagerkomponente und das mindestens eine Bauteil entlang einer Steckachse zur Verrastung der Rastanordnung aneinander montierbar sind. Somit ist eine einfache Steckmontage möglich.

Vorteilhaft ist vorgesehen, dass mindestens eine, insbesondere an der Lagerkomponente oder dem mindestens einen Bauteil angeordnete, Schrägfläche zur Betätigung der Rastanordnung in Richtung einer Rast-Lösestellung oder Außereingriffstellung beim Aneinanderstecken der Lagerkomponente und des mindestens einen Bauteils vorgesehen sind. Die Schrägfläche erleichtert die Steckmontage und vermeidet beispielsweise die Verwendung eines zusätzlichen Werkzeugs, mit dem die Rastanordnung, zum Beispiel der Sprengring, in eine Rast-Lösestellung verdrängt werden muss, um die Lagerkomponente und das mindestens eine Bauteil miteinander zu verbinden.

Damit beispielsweise die Rastanordnung mechanisch beim Betrieb oder der Nutzung der Anhängekupplung möglichst wenig belastet ist, können eine oder mehrere der nachfolgenden Maßnahmen zweckmäßigerweise vorgesehen sein:
Zweckmäßigerweise sind zwischen der Lagerkomponente und dem mindestens einen Bauteil Verdrehsicherungskonturen zum verdrehsicheren Halten der Lagerkomponente und des Bauteils quer zu der Steckachse vorhanden. Die Verdrehsicherungskonturen umfassen beispielsweise Steckkonturen, die entlang der Steckachse ineinander einsteckbar, jedoch relativ zueinander nicht verdrehbar sind.

Vorteilhaft ist vorgesehen, dass an der Lagerkomponente und dem mindestens einen Bauteil bezüglich der Steckachse zusätzlich zu der Rastanordnung Längsanschläge angeordnet sind, die bei verrasteter Rastanordnung aneinander anliegen. Die Längsanschläge können beispielsweise Flanschvorsprünge, T-förmige oder pilzförmige Strukturen, Hintergreifstrukturen oder dergleichen umfassen.

Die Rastanordnung erlaubt eine einfache Montage von Kupplungsarmlagerelement und Lageraufnahme. Zweckmäßigerweise ist mindestens eine Schrägfläche zur Betätigung der Rastanordnung in eine Rast-Lösestellung oder Lösestellung oder Außereingriffstellung vorhanden, die beispielsweise einen Rastvorsprung in Richtung einer Außereingriffstellung betätigt, wenn das Kupplungsarmlagerelement und die Lageraufnahme entlang der mindestens einen Lagerachse, insbesondere entlang der Schwenkachse, aneinander gesteckt werden. Die Lagerachse oder Schwenkachse stellt in diesem Fall eine Steckachse dar.

Vorteilhaft ist vorgesehen, dass die Fixiereinrichtung den Kupplungsarm mit dem Halter in einer Fixierstellung anhand mindestens einer Fixierkraft fixiert, wobei die Rastanordnung durch die mindestens eine Fixierkraft in der Fixierstellung unbelastet ist oder die mindestens eine Fixierkraft die Lagerkomponente und das mindestens eine Bauteil nicht in einem Sinne eines Lösens der Rastanordnung belastet. Die Fixierkraft trägt also mindestens dazu bei, die Rastanordnung in der Raststellung zu halten oder wirkt nicht entgegen der Verrastung. So können beispielsweise die Lagerkomponente und das Bauteil durch die Fixierkraft relativ zueinander fixiert werden, beispielsweise um den Kupplungsarm ortsfest am Halter zu fixieren. Auf die Rastanordnung selbst wird dabei keine Kraft ausgeübt und wenn doch, trägt diese Kraft, nämlich die Fixierkraft, dazu bei, die Verrastung aufrecht zu erhalten. Es versteht sich, dass die vorgenannte Maßnahme bei einer oder mehreren oder allen erfindungsgemäß eingesetzten Rastanordnungen einer Anhängekupplung vorteilhaft ist. Dies gilt auch für die nachfolgend erläuterte Maßnahme, die bei einer oder mehreren Rastanordnungen vorteilhaft ist.

Ein vorteilhaftes Konzept sieht vor, dass die Rastanordnung von allen Fixierkräften der Fixiereinrichtung zum ortsfesten Fixieren des Kupplungsarms am Halter frei ist oder dass die Rastanordnung durch die Fixierkräfte oder mindestens eine der Fixierkräfte in einem Sinne des ortsfesten Fixierens des Kupplungsarms an dem Halter belastet ist.

Erfindungsgemäß ist vorgesehen, dass das mindestens eine Bauteil, insbesondere der Kupplungsarm, an einer Halterkomponente des Halters oder der Lagerkomponente des Lagers, anhand einer Hintergreifstruktur mit einer Kraftrichtung zu dem Halter hin formschlüssig gehalten ist, wobei das Bauteil an der Halterkomponente oder Lagerkomponente entgegen der Kraftrichtung durch die Rastanordnung gehalten ist.

Vorteilhaft ist vorgesehen, dass die Hintergreifstruktur mindestens einen im Querschnitt L-förmigen, T-förmigen Hintergreifvorsprung und/oder einen insbesondere pilzartigen Kopf der Halterkomponente oder der Lagerkomponente umfasst und/oder dass die Halterkomponente einen Bestandteil einer Fixiereinrichtung der Anhängekupplung bildet.

Ein weiteres eine eigenständige Erfindung darstellendes Konzept sieht die folgende Anhängekupplung vor:
Anhängekupplung für ein Kraftfahrzeug mit einem Kupplungsarm, wobei der Kupplungsarm an einem am Kraftfahrzeug befestigten oder befestigbaren Halter zur Einnahme einer Gebrauchsstellung lösbar befestigbar oder anhand eines Schwenklagers zwischen einer Gebrauchsstellung und einer Nichtgebrauchsstellung um eine Schwenkachse schwenkbar gelagert ist, wobei der Kupplungsarm in der Gebrauchsstellung zum Anhängen eines Anhängers oder Befestigen eines Lastenträgers weiter nach hinten vor ein Heck des Kraftfahrzeugs vorsteht als in der für einen Nichtgebrauch des Kupplungsarms (vorgesehenen Nichtgebrauchsstellung, wobei der Kupplungsarm an einer Halterkomponente des Halters, insbesondere einer Lagerkomponente des Schwenklagers, anhand einer Hintergreifstruktur in einer Kraftrichtung zu dem Halter hin formschlüssig gehalten ist, dadurch gekennzeichnet, dass der Kupplungsarm an der Halterkomponente entgegen der Kraftrichtung durch eine Rastanordnung gehalten ist.

Die Anhängekupplung wird von der Halterkomponente an sich in Richtung des Halters kraftbeaufschlagt, in dem sich nämlich die Hintergreifstruktur der Halterkomponente an einer Widerlagerkontur des Kupplungsarms abstützt. Die Hintergreifstruktur bildet zweckmäßigerweise einen einstückigen Bestandteil der Halterkomponente. In Gegenrichtung, das heißt in einem Sinne einer Bewegung des Kupplungsarms von dem Halter, beispielsweise einer Halterplatte oder Tragplatte des Halters, weg, wirkt eine einfach zu realisierende Rastanordnung. Die Rastanordnung ist beim Fahrbetrieb kaum oder nicht durch äußere Kräfte belastet. Die Hauptlast trägt die Hintergreifstruktur.

Beispielsweise umfasst die Rastanordnung einen oder mehrere angefederte Rastvorsprünge. Zweckmäßigerweise umfasst die Rastanordnung mindestens einen Sprengring, der in Aufnahmen der Halterkomponente und des Kupplungsarms eingreift. Der Sprengring ist in eine Lösestellung verdrängbar, in welcher er nur in eine der Aufnahmen eingreift. Wenn der Sprengring sich jedoch entspannen kann, also die Fixierstellung einnimmt, greift er in beide Aufnahmen ein und sichert so den Kupplungsarm an der Halterkomponente.

Beispielsweise kann die Halterkomponente einen Bestandteil einer Fixiereinrichtung der Anhängekupplung bilden. Beispielsweise ist die Halterkomponente als eine Führungshülse oder als ein Führungskörper ausgestaltet.

Ein weiteres, eine an sich eigenständige Erfindung darstellendes Konzept sieht vor, dass mehrere oder sämtliche beweglichen Komponenten einer Anhängekupplung anhand von Rastanordnungen miteinander verrastet sind, wobei in Bezug auf beim Fahrbetrieb der Anhängekupplung auftretende Kräfte jeweils nicht rastende, formschlüssig haltende Hintergreifstrukturen oder Stützstrukturen in Eingriff miteinander sind. Somit können die jeweiligen Komponenten einfach miteinander, beispielsweise durch eine Steckbewegung, verrastet werden, wobei die Verrastung beim Fahrbetrieb keine oder geringe Kräfte aufnehmen muss. Die beim Fahrbetrieb auftretenden Kräfte werden von den Hintergreifstrukturen, beispielsweise T-förmigen Hintergreifstrukturen, L-förmigen Hintergreifstrukturen oder dergleichen, getragen. Die beim Fahrbetrieb auftretenden Kräfte können auch von Stützstrukturen, beispielsweise Längsanschlägen oder dergleichen, abgefangen werden. Die Rastanordnungen werden somit durch die beim Fahrbetrieb auftretenden Kräfte nicht oder nicht übermäßig beansprucht. Die Festigkeit bzw. Stabilität der Anhängekupplung im Fahrbetrieb ist gewährleistet.

Zweckmäßigerweise ist vorgesehen, dass die Lagerkomponente an dem Halter anhand der Rastanordnung, insbesondere anhand eines Sprengringes der Rastanordnung, drehbar und/oder verschieblich gelagert ist.

Zweckmäßigerweise ist vorgesehen, dass das Kupplungsarmlagerelement in einen Innenraum der Halterlageraufnahme eingreift, wobei an einem Innenumfang der Halterlageraufnahme und einem Außenumfang des Kupplungsarmlagerelements eine Lagernut und ein Lagervorsprung zur drehbaren Lagerung des Kupplungsarmlagerelements in der Halterlageraufnahme um die Lagerachse oder Schwenkachse ineinander eingreifen.

Dieses Konzept hat den Vorteil, dass das Kupplungsarmlagerelement am Außenumfang gelagert ist, während der Innenumfang der Halterlageraufnahme an dieser Stelle ebenfalls eine große Fläche bereitstellt, so dass die effektiven Lagerflächen nicht nahe bei der mindestens einen Lagerachse oder Schwenkachse sind, sondern davon radial weit entfernt und sich somit über einen relativ große Umfangslänge erstrecken. Die Belastung der Lagerflächen ist verhältnismäßig klein. Somit können die aneinander anliegenden Lagerflächen oder Lagerkomponenten in Bezug auf die Lagerachse oder Schwenkachse kurz sein, haben aber dennoch aufgrund ihres großen radialen Abstandes zu der Lagerachse oder Schwenkachse eine große effektive Ausdehnung.

Die nachfolgend ausgeführten Ausführungsformen tragen zur Verbesserung der Anhängekupplung bei.

Die Lagernut und der Lagervorsprung bilden zweckmäßigerweise eine Art Ringlager.

Prinzipiell wäre es zwar möglich, dass das Kupplungsarmlagerelement bezüglich der Halterlageraufnahme entlang der mindestens einen Lagerachse, insbesondere der Schwenkachse, verschieblich gelagert ist.

Bevorzugt ist jedoch das in der Zeichnung dargestellte Konzept, bei dem das Kupplungsarmlagerelement an der Halterlageraufnahme entlang der Lagerachse oder Schwenkachse axial unverschieblich gelagert ist.

Nun wäre es möglich, diese axiale Unverschieblichkeit zum Beispiel dadurch zu realisieren, dass bezüglich der Schwenkachse wirksame Längsanschläge, von denen einer am Kupplungsarmlagerelement und ein anderer der Halterlageraufnahme angeordnet sind, aneinander anschlagen. Beispielsweise kann an einer Stirnseite der Halterlageraufnahme ein vor das Kupplungsarmlagerelement vorstehender Längsanschlag, beispielsweise ein Bolzen, ein Flanschvorsprung oder dergleichen, anschlagen.

Bevorzugt ist jedoch, dass die Lagernut und der Lagervorsprung des Kupplungsarmlagerelements und der Halterlageraufnahme, die ineinander eingreifen, dafür sorgen, dass das Kupplungsarmlagerelement an der Halterlageraufnahme in Bezug auf die Schwenkachse oder eine Schwenkachse axial im Wesentlichen unverschieblich gelagert ist. Somit sind keine weiteren diese Unverschieblichkeit gewährleistenden Komponenten nötig.

Es ist vorteilhaft, beispielsweise in diesem Zusammenhang, aber auch ansonsten, dass neben der Lagernut und dem Lagervorsprung ein weiterer Lagerabschnitt des Kupplungsarmlagerelements am Innenumfang der Halterlageraufnahme gelagert ist. Beispielsweise ist ein zylindrischer Lagerabschnitt vorgesehen, der in einem entsprechend zylindrischen Bereich der Halterlageraufnahme gelagert ist. Besonders bevorzugt ist es in diesem Zusammenhang, wenn dieser Lagerabschnitt des Kupplungsarmlagerelements in Bezug auf die Schwenkachse oder eine Schwenkachse länger oder breiter als die Lagernut und der Lagervorsprung ist. Somit können also der Lagervorsprung und die Lagernut beispielsweise eine Verschieblichkeit des Kupplungsarmlagerelements in der Halterlageraufnahme begrenzen oder unterbinden, während der Lagerabschnitt neben dem Lagervorsprung und der Lagernut eine großflächige Abstützung oder großflächige Drehlagerfläche des Kupplungsarmlagerelements in der Halterlageraufnahme bereitstellt.

Eine Variante der Erfindung sieht vor, dass die Lagernut an der Halterlageraufnahme und der Lagervorsprung an dem Kupplungsarmlagerelement angeordnet sind. Eine andere Variante sieht vor, dass die Lagernut am Kupplungsarmlagerelement angeordnet ist, in die der Lagervorsprung der Halterlageraufnahme eingreift. Wenn mindestens zwei Lagervorsprünge und zwei Lagernuten vorgesehen sind, ist es möglich, dass ein Lagervorsprung der Halterlageraufnahme und der andere Lagervorsprung am Kupplungsarmlagerelement angeordnet sind, wobei von den zugeordneten Lagernuten ebenfalls eine am Kupplungsarmlagerelement und die andere an der Halterlageraufnahme angeordnet sind.

Bevorzugt ist vorgesehen, dass der Lagervorsprung oder die Lagernut oder beide ringförmig oder teilringförmig sind. Es ist beispielsweise möglich, dass die Lagernut als eine Ringnut ausgestaltet ist, die sich am Innenumfang der Halterlageraufnahme oder am Außenumfang des Kupplungsarmlagerelements erstreckt. Gleichfalls ist es möglich, dass der Lagervorsprung als ein Ringvorsprung ausgestaltet ist, der beispielsweise nach radial innen vor den Innenumfang der Halterlageraufnahme oder nach radial außen vor den Außenumfang des Kupplungsarmlagerelements vorsteht.

Es ist weiterhin möglich, dass mehrere Lagernuten und/oder mehrere Lagervorsprünge vorgesehen sind. Es ist beispielsweise möglich, dass in einem Winkelabstand bezüglich der Schwenkachse zueinander beabstandete Lagervorsprünge oder Lagernuten vorgesehen sind. Die Lagervorsprünge können beispielsweise in der Art von Zähnen ausgestaltet sein. Es ist aber auch möglich, dass in Reihenrichtung nebeneinander bezüglich der Schwenkachse zueinander beabstandete Lagervorsprünge oder Lagernuten vorgesehen sind. Weiterhin ist auch eine Kombination beider vorgenannter Maßnahmen möglich, d.h. dass beispielsweise in Winkelabstand bezüglich der Schwenkachse und in Reihenrichtung bezüglich der Schwenkachse nebeneinander mindestens zwei Lagernuten und/oder mindestens zwei Lagervorsprünge vorgesehen sind.

Des Weiteren ist es auch möglich, dass beispielsweise die Lagernut eine durchgehende, ringförmige Lagernut ist, in die mindestens zwei Lagervorsprünge, die einen Winkelabstand zueinander haben, eingreifen. Auch umgekehrt ist es möglich, dass Lagernuten in einem Winkelabstand vorgesehen sind, in die jedoch ein einziger Lagervorsprung eingreift.

Ein bevorzugtes Konzept sieht vor, dass eine einzige Lagernut und ein einziger Lagervorsprung vorgesehen sind, die ineinander eingreifen. Das ist in der Zeichnung dargestellt.

Die Lagernut wird zweckmäßigerweise von einem ersten Lagerkörper und einem zweiten Lagerkörper gebildet oder begrenzt, zwischen denen der Lagervorsprung sandwichartig aufgenommen ist. Die beiden Lagerkörper können beispielsweise eine erste Lagerkomponente und eine zweite Lagerkomponente darstellen. Die Lagerkörper oder Lagerkomponenten sind vorzugsweise relativ zueinander ortsfest und/oder unverdrehbar und unverschieblich miteinander verbunden. Somit ist die Anhängekupplung sehr einfach zu montieren, indem nämlich die Lagernut zwischen den Lagerkörpern angeordnet wird und anschließend die Lagerkörper miteinander verbunden werden.

Zur Befestigung der Lagerkörper oder Lagerkomponenten aneinander ist eine Befestigungseinrichtung vorgesehen. Die Befestigungseinrichtung umfasst beispielsweise eine Schraubenanordnung, eine Klemmeinrichtung, eine Rastanordnung oder dergleichen.

Beispielsweise kann der eine Lagerkörper auf den anderen Lagerkörper aufgeschraubt sein. Es ist auch möglich, dass eine andersartige Verschraubung realisiert ist, bei der mindestens eine, vorzugsweise mehrere, Schrauben durch den einen Lagerkörper durchgeschraubt sind und in den anderen Lagerkörper oder einen diesen anderen Lagerkörper stützenden Stützkörper eingeschraubt sind. Bevorzugt sind mehrere, sich an einem Außenumfang des Lagerkörpers im Winkelabstand bezüglich der Schwenkachse angeordnete Schrauben vorgesehen, sodass ein gleichmäßiger Halt erzielt ist.

Es ist aber auch möglich, dass der eine Lagerkörper mit dem anderen Lagerkörper verrastet ist. Mithin können also die erste Lagerkomponente und die zweite Lagerkomponente miteinander anhand einer Rastanordnung verrastet sein. Bevorzugt ist vorgesehen, dass die Verrastung unlösbar ist, das heißt dass die Lagerkörper dann, wenn sie einmal miteinander verrastet sind, nicht mehr voneinander gelöst werden können.

Eine derartige Verrastung ließe sich beispielsweise anhand eines Sprengringes oder dergleichen realisieren. Der Sprengring wird beispielsweise in eine Sprengring-Aufnahme hinein komprimiert, wenn die Lagerkörper oder Lagerkomponenten in Eingriff miteinander gebracht werden, wobei sich der Sprengring aus der Sprengring-Aufnahme des einen Lagerkörpers oder der einen Lagerkomponente heraus in eine Sprengring-Aufnahme des anderen Lagerkörpers oder der anderen Lagerkomponente hinein ausdehnt, wenn die Lagerkörper bzw. Lagerkomponenten in Eingriff miteinander sind. Der Sprengring greift dann in beide Sprengring-Aufnahmen ein, sodass er die Lagerkörper oder Lagerkomponenten miteinander verbindet und koppelt. Der einmal entspannte, beispielsweise ausgedehnte, Sprengring kann nicht mehr ohne ein Spezialwerkzeug so betätigt werden, dass er aus zumindest einer der Sprengring-Aufnahmen heraus gelangt, um die Lagerkörper oder Lagerkomponenten voneinander zu trennen.

Zu einer Befestigung der Lagerkörper oder Lagerkomponenten aneinander ist aber auch eine Klemmeinrichtung geeignet. Beispielsweise ist der eine Lagerkörper mit dem anderen Lagerkörper verklemmt, insbesondere anhand eines Klemmrings, einer Klemmspange oder dergleichen.

Jedenfalls ist eine lösbare Montage des einen Lagerkörpers am anderen Lagerkörper vorteilhaft, um den Lagervorsprung sozusagen sandwichartig in der Lageraufnahme oder Lagernut, die von beiden Lagerkörpern begrenzt ist, aufzunehmen.

Der erste Lagerkörper oder die erste Lagerkomponente wird zweckmäßigerweise von einem Widerlagerkörper des Halters gebildet.

Der Widerlagerkörper kann einen integralen Bestandteil des Halters bilden. Es ist aber auch möglich, dass der Widerlagerkörper an einem Grundkörper des Halters befestigt ist, beispielsweise mit diesem verschraubt. Der Widerlagerkörper dient beispielsweise zur Abstützung des Kupplungsarmlagerelements und/oder zur Abstützung eines Fixierkörpers.

Eine zweckmäßige Variante der Erfindung sieht vor, dass mindestens einer der Lagerkörper als eine Lagerhülse ausgestaltet ist. Bevorzugt ist diese Konstruktion insbesondere dann, wenn beispielsweise der Halter, der am Fahrzeug befestigt oder befestigbar ist, selbst oder der schon erwähnte Widerlagerkörper, der am Halter befestigt ist, den einen Lagerkörper oder die eine Lagerkomponente bereitstellen, während der andere Lagerkörper bzw. die andere Lagerkomponente von der Lagerhülse gebildet ist.

Vorteilhaft ist vorgesehen, dass die Anhängekupplung eine Fixiereinrichtung zum ortsfesten Fixieren des Kupplungsarms am Halter in der Gebrauchsstellung und/oder der Nichtgebrauchsstellung aufweist.

Die Lagernut und der Lagervorsprung bilden zweckmäßigerweise Bestandteile einer Fixiereinrichtung zum ortsfesten Fixieren des Kupplungsarms am Halter in der Gebrauchsstellung und/oder der Nichtgebrauchsstellung.

Bevorzugt ist es, wenn die Lagernut und der Lagervorsprung Stützflächen und Widerlagerflächen bereitstellen, zum Beispiel eine Stützfläche am Lagervorsprung und eine Widerlagerfläche an der Lagernut, die zur Abstützung aneinander in einer Fixierstellung vorgesehen sind, in welcher das Kupplungsarmlagerelement bezüglich der Halterlageraufnahme ortsfest fixiert ist.

Möglich ist natürlich auch, dass an der Stützfläche und der Widerlagerfläche beispielsweise auch Formschlusskonturen vorgesehen sind. Wenn jedoch das Konzept realisiert ist, dass das Kupplungsarmlagerelement bezüglich der Halterlageraufnahme entlang der Lagerachse oder Schwenkachse nicht verschieblich ist, sondern nur drehbeweglich ist, kann dennoch eine optimale Abstützung im Zusammenhang oder in Zusammenwirkung mit einem anderen fixierenden Element, beispielsweise des noch erläuterten Fixierkörpers gegeben sein.

Als Vorteil erweist sich, wenn die Axialposition des Kupplungsarmlagerelements bezüglich der Halteaufnahme stets gleich bleibt, dass der Kupplungsarm nur gedreht wird und nicht in irgendeiner Form axial verstellt wird. Somit ist eine besonders hohe Präzision bei der Verstellung zwischen der Gebrauchsstellung und der Nichtgebrauchsstellung möglich. Zudem wird dadurch auch vermieden, dass bei dem Verschwenken zwischen der Gebrauchsstellung und der Nichtgebrauchsstellung Formschlusskonturen aneinander entlang gleiten, was zum Beispiel zu einem unangenehmen Rattergeräusch führen kann.

Die Lagernut und der Lagervorsprung einerseits und ein Fixierkörper zur Fixierung des Kupplungsarmlagerelements an der Halterlageraufnahme andererseits, sind zweckmäßigerweise an einander entgegengesetzten Seiten eines Widerlagerkörpers des Halters angeordnet, wobei der Widerlagerkörper in der Fixierstellung sandwichartig zwischen den Fixierkörper und die Anordnung aus Lagernut und Lagervorsprung geklemmt ist. Zum Beispiel stützen sich einerseits der Lagervorsprung und andererseits der Fixierkörper an dem Widerlagerkörper ab, sodass der Widerlagerkörper zwischen den Lagervorsprung und den Fixierkörper geklemmt ist.

Bevorzugt ist ein Fixierantrieb zum Betätigen des Fixierkörpers zwischen einer Lösestellung und einer Fixierstellung vorgesehen. In der Lösestellung kann der Kupplungsarm relativ zum Halter bewegt werden, in der Fixierstellung ist der Kupplungsarm bezüglich des Halters ortsfest fixiert. Der Fixierantrieb betätigt den Fixierkörper zweckmäßigerweise linear, insbesondere entlang mindestens einen Lagerachse, insbesondere der Schwenkachse. Es versteht sich, dass auch eine schraubenartige Betätigung oder eine Drehbetätigung des Fixierkörpers zwischen der Fixierstellung und der Lösestellung möglich ist.

Zweckmäßigerweise ist vorgesehen, dass der Fixierantrieb in einem Innenraum des Kupplungsarmlagerelements angeordnet ist. Es ist aber auch möglich, dass der Fixierantrieb ganz oder teilweise außerhalb des Kupplungsarmlagerelements angeordnet ist. Zum Beispiel kann der Fixierantrieb am Halter angeordnet sein und den Fixierkörper oder die Fixiereinrichtung zwischen der Fixierstellung und der Lösestellung betätigen.

Der Lagervorsprung steht beispielsweise in der Art eines Lagerflansches von dem Kupplungsarmlagerelement nach radial außen vor. Der Lagerflansch ist vorzugsweise als ein Ringflansch ausgestaltet. Der Lagervorsprung kann aber auch beispielsweise einzelne Zähne umfassen. Auch derartige Zähne können flanschartig ausgestaltet sein, beispielweise plattenartig sein.

Zweckmäßig ist eine Ausgestaltung, die eine an sich eigenständige Erfindung darstellt, bei der der Lagervorsprung mindestens ein Rastelement, beispielsweise eine Anordnung einer oder mehrerer Rastnasen, einen Sprengring oder dergleichen, umfasst oder dadurch gebildet ist. Das Rastelement greift in die Lagernut ein. Die Montage wird deutlich erleichtert. Es ist beispielsweise möglich, das Kupplungsarmlagerelement in den Innenraum der Halterlageraufnahme einzuführen, wobei das mindestens eine Rastelement dabei zunächst nachgibt, anschließend jedoch in die Lagernut einrastet. Dann ist eine Drehlagerung durch das mindestens eine Rastelement realisiert. Die Ausführungsform mit dem Sprengring hat den Vorteil, dass sozusagen die Lagernut einen Ausdehnungsraum für den Sprengring darstellt und der Sprengring an sich schon eine zumindest teilringförmige Gestalt hat, also über einen möglichst großen Drehumfang eine Lagerung bereitstellt.

An dieser Stelle sei bemerkt, dass dieses Montagekonzept nicht nur dann realisierbar ist, wenn das Kupplungsarmlagerelement in einen Innenraum der Halterlageraufnahme eingreift, sondern dass selbstverständlich auch ein Lagervorsprung am fahrzeugseitigen Halter vorgesehen sein kann, der in eine Lageraufnahme des Kupplungsarmlagerelements eingreift. Auch zwischen dem Innenumfang der Lageraufnahme und dem Außenumfang des Lagervorsprungs kann eine Anordnung aus Lagernut und Lagervorsprung mit mindestens einem Rastelement realisiert sein.

Zweckmäßigerweise ist eine Abdichtung vorhanden, die ein Eindringen von Schmutz oder Feuchtigkeit oder dergleichen in den Zwischenraum zwischen das Kupplungsarmlagerelement und die Halterlageraufnahme verhindert. Möglich ist beispielsweise, dass die Anhängekupplung in einem Schutzgehäuse angeordnet ist, insbesondere einem balgartigen und/oder flexiblen Schutzgehäuse, beispielsweise aus elastischem Kunststoff, Gummi oder dergleichen.

Bevorzugt ist jedoch, dass zwischen dem Kupplungsarmlagerelement und der Halterlageraufnahme eine Dichtungsanordnung angeordnet ist. In diesem Zusammenhang ist es besonders zweckmäßig, wenn die Anhängekupplung kein zusätzliches, insbesondere biegeflexibles, Schutzgehäuse, das das Schwenklager umgibt, aufweist.

Die Dichtungsanordnung umfasst beispielsweise einen Dichtungsring, der in einer Nut des Kupplungsarmlagerelements oder der Halterlageraufnahme aufgenommen ist. Die Dichtungsanordnung ist also zweckmäßigerweise als eine Innendichtung ausgestaltet, die zwischen Kupplungsarmlagerelement und Halterlageraufnahme wirkt. Insbesondere dann, wenn das Kupplungsarmlagerelement bezüglich der Halterlageraufnahme nur schwenkbar, jedoch bezüglich der Schwenkachse axial unverschieblich aufgenommen ist, kann die Dichtungsanordnung optimal abdichten. Es ist aber auch denkbar, dass bei einer Verschieblichkeit entlang der mindestens einen Lagerachse, beispielsweise entlang der Schwenkachse oder einer Schwenkachse, die Dichtungsanordnung sozusagen eine Relativbewegung zwischen Halterlageraufnahme und Kupplungsarmlagerelement mitmacht und an zumindest einer der Lagerflächen entlang gleitet. Auch dann ist eine entsprechend optimale Abdichtung möglich.

Bevorzugt ist es, wenn die Dichtungsanordnung zwischen dem Kupplungsarm und der die Lagernut und den Lagervorsprung umfassenden Lageranordnung angeordnet ist. Beispielsweise ist also die Dichtungsanordnung an dem bereits erwähnten Lagerabschnitt neben dem Lagervorsprung und der Lagernut angeordnet, der sich mit seinem Außenumfang am Innenumfang der Halterlageraufnahme abstützt.

Eine zweckmäßige Ausführungsform der Erfindung sieht vor, dass der Lagervorsprung und die Lagernut an einander entgegengesetzten Seiten einerseits durch die Dichtungsanordnung und andererseits durch einen Deckel abgedichtet sind. Der Deckel ist beispielsweise am fahrzeugseitigen Halter angeordnet, während sich die Dichtungsanordnung zwischen dem Kupplungsarm und der Paarung von Lagervorsprung und Lagernut befindet. Der Deckel ist zweckmäßigerweise ortsfest an einem fahrzeugseitigen oder halterseitigen Trägerelement des Halters befestigt, muss sich also nicht drehen.

Ein derartiger Deckel hat zweckmäßigerweise noch eine Stützfunktion, beispielsweise für einen Fixierantrieb einer Fixiereinrichtung, mit der der Kupplungsarm relativ zum fahrzeugseitigen Halter ortsfest fixierbar ist, insbesondere in der Gebrauchsstellung, zweckmäßigerweise aber auch in der Nichtgebrauchsstellung.

Eine derartige Fixiereinrichtung ist aber auch ohne die Stützfunktion des Deckels realisierbar. An einem freien Endbereich des Kupplungsarms ist vorzugsweise ein Kuppelelement in der Gestalt einer Kupplungskugel oder eines anderen Kupplungsstücks vorgesehen, an das ein Anhänger angekuppelt werden kann. Es ist aber auch möglich, dass der Kupplungsarm einen Steckvorsprung oder eine Steckaufnahme zum Ankuppeln eines Lastenträgers aufweist.

Die Anhängekupplung weist zweckmäßigerweise eine Fixiereinrichtung auf, die in einer Fixierstellung den Kupplungsarm bezüglich des Halters ortsfest fixiert und in einer Lösestellung den Kupplungsarm zur Verstellung zwischen der Gebrauchsstellung und der Nichtgebrauchstellung freigibt. Ein Fixierantrieb zum Betätigen der Fixiereinrichtung zwischen der Fixierstellung und der Lösestellung weist einen Antriebskörper zum Betätigen einer Fixierbetätigungsfläche eines Fixierkörpers der Fixiereinrichtung auf, um den Fixierkörper in eine den Kupplungsarm am Halter ortsfest fixierenden Fixierstellung zu betätigen.

Vorteilhaft ist vorgesehen, dass ein Lösekörper anhand von Befestigungsmitteln mit dem Fixierkörper verbunden ist, wobei an dem Lösekörper eine Lösebetätigungsfläche zum Verstellen des Fixierkörpers in Richtung der zum Bewegen des Kupplungsarms gegenüber dem Halter vorgesehenen Lösestellung angeordnet ist.

Der Vorteil dieser Konstruktion ist es, dass der Lösekörper mit dem Fixierkörper verbunden ist, jedoch zur Montage beispielsweise des Antriebskörpers dies noch nicht sein muss. Somit kann beispielsweise der Fixierantrieb mit wesentlichen beweglichen Komponenten in einem Innenraum des Fixierkörpers montiert werden, wobei dann der Fixierkörper sozusagen durch den Lösekörper verschlossen wird.

Der Fixierkörper und der Lösekörper sind zweckmäßigerweise durch eine Anordnung aus Steckaufnahme und Steckvorsprung aneinander ansteckbar. Bevorzugt ist am Fixierkörper die Steckaufnahme und am Lösekörper der Steckvorsprung vorgesehen. Aber auch die umgekehrte Konfiguration mit Steckvorsprung am Fixierkörper und Steckaufnahme am Lösekörper ist ohne weiteres möglich.

Es ist aber auch möglich, dass der Lösekörper und der Fixierkörper stirnseitig miteinander verkoppelt sind, d.h. dass der eine Körper nicht in den anderen eingreift, sondern mit einer Planfläche oder sonstigen Stirnseitenfläche an einer Stirnseitenfläche des anderen Körpers anliegt.

Eine zweckmäßige Ausgestaltung der Erfindung sieht vor, dass die Befestigungsmittel ineinander eingreifende Schraubabschnitte des Fixierkörpers und des Lösekörpers aufweisen. Somit kann der Lösekörper zum Beispiel an einen Fixierkörper angeschraubt werden. Es ist aber auch möglich, dass Schraubaufnahmen und/oder Durchstecköffnungen am Lösekörper und am Fixierkörper vorgesehen sind, die sich für eine Schraubanordnung eignen. Somit umfassen also die Befestigungsmittel zum Beispiel eine Schraubenanordnung.

Es ist möglich, dass der Lösekörper und der Fixierkörper anhand einer Verrastung, also anhand von Rastmitteln, und/oder anhand einer Verklemmung, also Klemmmitteln, miteinander verbunden sind.

Selbstverständlich sind auch Kombinationen sämtlicher vorgenannter Maßnahmen möglich, d.h. dass der Lösekörper und der Fixierkörper einerseits miteinander verrastet, andererseits aber auch noch zusätzlich durch Schrauben oder jedenfalls mindestens eine Schraube miteinander verbunden sind.

Zweckmäßigerweise ist eine Verrastung vorgesehen, das heißt dass der Lösekörper und der Fixierkörper anhand beispielsweise eines elastischen oder beweglichen Rastvorsprungs, der in eine Rastaufnahme am anderen Körper von Lösekörper und Fixierkörper eingreift, miteinander verbunden sind. Der Rastvorsprung und die Rastaufnahme sind beispielsweise an einer Stirnseitenfläche angeordnet, wenn der Lösekörper und der Fixierkörper mit Stirnseitenfläche aneinander anliegen. Besonders bevorzugt sind Rastvorsprung und Rastaufnahme jedoch an dem Steckvorsprung und der Steckaufnahme angeordnet, die am Lösekörper und am Fixierkörper oder umgekehrt angeordnet sind.

Es ist auch möglich, den Fixierkörper und den Lösekörper miteinander zu vernieten. Somit ist beispielsweise mindestens ein Niet zwischen Fixierkörper und Lösekörper vorgesehen.

Eine weitere Variante der Befestigungsmittel sieht vor, dass der Lösekörper und der Fixierkörper miteinander verklebt sind, also eine Klebverbindung vorgesehen ist. Weiterhin ist es möglich, dass der Lösekörper und der Fixierkörper miteinander verschweißt sind. Insbesondere eignet sich hier eine Punktschweißverbindung.

Eine besonders bevorzugte Ausführungsform der Erfindung, die auch anhand der Zeichnung noch erläutert wird, sieht vor, dass die Befestigungsmittel mindestens einen Sprengring umfassen, der in einer Befestigungsstellung in einander gegenüberliegende Nuten des Fixierkörpers und des Lösekörpers eingreift. Diese Anordnung ist insbesondere in Verbindung mit der Steckaufnahme und dem Steckvorsprung ohne weiteres realisierbar, d.h. es befinden sich an Steckaufnahme und Steckvorsprung entsprechend tiefe Nuten, wobei in eine der Nuten von Lösekörper oder Fixierkörper der Sprengring zunächst eingebracht wird, dann der jeweils andere Körper von Fixierkörper oder Lösekörper an den erstgenannten Körper angesteckt wird, wobei sich dann die Nuten gegenüberliegen und der Sprengringes sich so verformt, dass er in die einander gegenüberliegende Nuten an Steckvorsprung und Steckaufnahme eingreift und somit den Fixierkörper mit dem Lösekörper verbindet.

Die vorgenannten Nuten sind vorzugsweise ringförmig oder als Ringnuten ausgestaltet. Es versteht sich, dass auch eine teilringförmige Nut ausreicht, um einen Sprengring aufzunehmen.

Eine besonders bevorzugte Ausführungsform der Erfindung sieht vor, dass die Befestigungsmittel nicht zerstörungsfrei und/oder nicht durch einen Werkzeugeingriff voneinander lösbar sind. Somit bleiben der Fixierkörper und der Lösekörper fest miteinander verbunden. Es ist aber auch möglich, dass ein Spezialwerkzeug vorgesehen ist, beispielsweise ein solches, das in einem Zwischenraum zwischen Steckvorsprung und Steckaufnahme passt, um den Rastvorsprung außer Eingriff mit der Rastaufnahme zu bringen.

Im in der Zeichnung dargestellten Ausführungsbeispiel ist dargestellt, dass zweckmäßigerweise der Fixierkörper und der Lösekörper anhand der Befestigungsmittel unbeweglich oder fest miteinander verbunden sind. Dies muss so verstanden werden, dass durch die Verbindung von Lösekörper und Fixierkörper ein gewisses "Restspiel" zwischen Lösekörper und Fixierkörper bleibt, diese aber an sich nicht relativ zueinander beweglich sind.

Es ist aber auch möglich, dass zwischen dem Lösekörper und dem Fixierkörper dennoch ein Bewegungsspiel bleibt, beispielsweise in einer Verschieberichtungen. Somit ist es beispielsweise möglich, dass zwar der Lösekörper und der Fixierkörper durch die Befestigungsmittel miteinander verbunden sind, also nicht ohne weiteres zu trennen sind, jedoch der Lösekörper relativ zum Fixierkörper um das Bewegungsspiel bewegt werden kann, bevor eine Bewegungsmitnahme erfolgt, das heißt der Lösekörper den Fixierkörper mitnimmt. Beispielsweise sind Mitnahmevorsprünge oder Mitnahmemittel für eine Bewegungsmitnahme zwischen dem Lösekörper und dem Fixierkörper vorhanden.

Es ist auch möglich, dass der Fixierkörper und der Lösekörper zwar relativ zueinander verdrehbar sind, jedoch bezüglich der Drehachse unverschieblich miteinander verbunden sind.

Der Fixierkörper und/oder der Lösekörper können beispielsweise in eine Aufnahme des Kupplungsarmlagerelements oder des Halters eingreifen. In der Aufnahme können der Fixierkörper oder der Lösekörper beweglich gelagert sein, Beispielweise verschieblich oder verdrehbar. Es ist aber auch möglich, dass der Fixierkörper und/oder der Lösekörper auf dem Halter oder dem Kupplungsarmlagerelement angeordnet sind. Auch hier ist eine Beweglichkeit möglich, eine schiebebewegliche und/oder eine schwenkbewegliche Lagerung des Fixierkörpers oder des Lösekörpers oder beiden bezüglich des Halters.

Der Fixierkörper und/oder der Lösekörper können bezüglich des Kupplungsarmlagerelements und/oder des Halters verdrehgesichert sein. Beispielsweise ist mindestens eine Verdrehsicherungskontur am Fixierkörper oder Lösekörper vorhanden, die mit einer Verdrehsicherungskontur am Kupplungsarmlagerelement oder Halter zusammenwirkt. Beispielsweise eignen sich entsprechende polygonale Konturen oder Querschnitte von Fixierkörper oder Lösekörper und zugeordneter Aufnahme am Halter oder Kupplungsarmlagerelement.

Eine bevorzugte Ausführungsform der Erfindung sieht vor, dass der Antriebskörper sozusagen zwischen der Lösebetätigungsfläche und der Fixierbetätigungsfläche angeordnet ist. Bevorzugt hat der Antriebskörper zwischen der Lösebetätigungsfläche und der Fixierbetätigungsfläche ein Bewegungsspiel. Allerdings ist es zweckmäßig, wenn die Lösebetätigungsfläche und die Fixierbetätigungsfläche einen Stellweg des Antriebskörpers begrenzen.

Es ist möglich, dass der Antriebskörper auf die Lösebetätigungsfläche oder die Fixierbetätigungsfläche oder beide direkt einwirkt. Insbesondere in Bezug auf die Lösebetätigungsfläche ist dies vorteilhaft. Andererseits ist es zweckmäßig, wenn auch ein Übertragungskörper, zum Beispiel eine Kugel, eine Rolle oder ein Keilkörper vorgesehen ist, über die der Antriebskörper auf die Lösebetätigungsfläche und/oder die Fixierbetätigungsfläche einwirkt.

Zweckmäßigerweise ist eine Kraftverstärkung zwischen Antriebskörper und Fixierkörper und/oder Lösekörper vorgesehen.

Zweckmäßigerweise ist beispielsweise ein Keilgetriebe oder eine im Sinne eines Keilgetriebes wirkende Keilflächen- oder Schrägflächenanordnung zwischen dem Antriebskörper und dem Fixierkörper und/oder dem Lösekörper vorgesehen.

Eine bevorzugte Ausführungsform sieht vor, dass der Lösekörper und der Fixierkörper einen Aufnahmeraum begrenzen, in welchem der Fixierantrieb zumindest teilweise aufgenommen ist. Beispielsweise sind der Antriebskörper und/oder ein Übertragungskörper in dem Innenraum oder Aufnahmeraum des Fixierkörpers und des Lösekörpers angeordnet.

Vorzugsweise ist vorgesehen, dass der Lösekörper den Aufnahmeraum stirnseitig verschließt. Der Lösekörper bildet zweckmäßigerweise einen Deckel für den Aufnahmeraum.

Die Montage gestaltet sich in diesem Zusammenhang besonders einfach, indem nämlich die in dem Aufnahmeraum anzuordnenden Komponenten der Fixiereinrichtung, beispielsweise der Antriebskörper, gegebenenfalls auch noch ein Übertragungskörper, in dem Aufnahmeraum des Lösekörpers angeordnet werden, worauf dann der Aufnahmeraum durch den jeweils anderen Körper von Lösekörper und Fixierkörper verschlossen wird.

Bevorzugt steht ein Betätigungsabschnitt des Antriebskörpers vor den Aufnahmeraum vor. Somit kann der Antriebskörper sozusagen von außen her betätigt werden. Der Betätigungsabschnitt kann mit dem Antriebskörper einstückig sein, aber auch lösbar mit diesem verbunden sein. Es ist zum Beispiel möglich, dass ein Betätigungsabschnitt in Gestalt eines Bolzens oder dergleichen an den eigentlichen Antriebskörper angeschraubt ist.

Eine bevorzugte Ausführungsform der Erfindung sieht vor, dass ein Führungskörper zur Führung des Antriebselements oder zur Führung eines Übertragungselements des Fixierkörpers oder eines Übertragungskörpers zum Übertragen einer Antriebskraft auf den Fixierkörper in den Aufnahmeraum eingreift. Beispielsweise handelt es sich bei dem Führungskörper um einen hohlwellenartigen Führungskörper. In einer Führungsaufnahme des Führungskörpers ist zweckmäßigerweise der Antriebskörper beweglich gelagert. Der Führungskörper hat zweckmäßigerweise mindestens einen mit der Führungsaufnahme kommunizierenden Führungskanal für einen Übertragungskörper, der durch den Antriebskörper aus der Durchtrittsöffnung heraus in Richtung des Fixierkörpers oder des Lösekörpers betätigbar ist, um den Fixierkörper oder Lösekörper zu betätigen. In einem derartigen Führungskanal, vorzugsweise sind nämlich mehrere derartige Führungskanäle vorgesehen, ist der Übertragungskörper beispielsweise linear verschieblich, drehbar oder dergleichen aufgenommen.

Bevorzugt ist es, wenn der Führungskörper mit dem Kupplungsarmlagerelement verbunden ist, insbesondere fest verbunden ist.

Der Antriebskörper ist zweckmäßigerweise stabförmig oder bolzenförmig.

Es ist aber auch möglich, dass der Antriebskörper hülsenförmig ist. So ist zum Beispiel vorgesehen, dass der Fixierkörper und/oder der Lösekörper in einem Innenraum des Antriebskörpers eingreifen.

Die erfindungsgemäße Kombination aus Fixierkörper und Lösekörper erlaubt auch einen optimierten Materialmix. Der Fixierkörper muss in der Fixierstellung relativ große Kräfte, die für einen Fahrbetrieb der Anhängekupplung ausgelegt sind, aushalten. Der Lösekörper ist im Prinzip nur für die Lösefunktion notwendig, kann also aus einem anderen, weniger belastbaren Material bestehen.

Zweckmäßigerweise ist vorgesehen, dass der Fixierkörper aus einem härteren Material besteht als der Lösekörper. Beispielsweise ist vorgesehen, dass der Fixierkörper aus Metall, der Lösekörper aus Kunststoff besteht. Zweckmäßigerweise besteht der Fixierkörper aus Metall. Es versteht sich, dass bei dem Fixierkörper auch Abschnitte aus weniger belastbarem Material vorhanden sein können, insbesondere dann, wenn diese bei Gebrauch des Fixierkörpers weniger belastet sind. Die fixierenden bzw. tragenden Abschnitte des Fixierkörpers sind jedoch vorzugsweise aus dem vorgenannten Metall, insbesondere aus Stahl.

Es ist aber auch möglich, dass unterschiedliche Metalle für Lösekörper und Fixierkörper verwendet werden oder dass unterschiedliche Kunststoffe für Lösekörper und Fixierkörper Anwendung finden.

Es ist auch möglich, dass der Lösekörper aus einem weicheren oder weniger druckfesten Material als der Fixierkörper besteht.

Der Lösekörper ist zweckmäßigerweise ein Montageteil zur Befestigung des Kupplungsarmlagerelements an der Halterlageraufnahme. Somit kann beispielsweise durch die Montage des Lösekörpers am Fixierkörper der Fixierkörper oder Lösekörper als ein Halteelement oder Montageteil dienen, um das Kupplungsarmlagerelement am Halter zu befestigen. Eine Befestigung soll in diesem Zusammenhang aber so verstanden werden, dass dennoch eine Beweglichkeit des Kupplungsarmlagerelements bezüglich der Halterlageraufnahme vorhanden ist.

Zweckmäßigerweise ist vorgesehen, dass der an dem Fixierkörper befestigte Lösekörper das Kupplungsarmlagerelement zumindest von einer Seite her, vorzugsweise aber insgesamt an der Halteaufnahme verliersicher hält. Mithin kann also die gesamte Konfiguration aus Kupplungsarmlagerelement mit montiertem Lösekörper nicht mehr verloren gehen.

Eine bevorzugte Konfiguration sieht vor, dass der Lösekörper oder der Fixierkörper oder beide insgesamt einen kragenartigen Vorsprung bereitstellen, der einen Widerlagerabschnitt des Halters hintergreift oder übergreift. Der kragenartige Vorsprung, insbesondere ein Flanschvorsprung oder pilzartiger Vorsprung, dient zweckmäßigerweise zum Halten beispielsweise des Fixierkörpers oder des Lösekörpers oder des Kupplungsarmlagerelements am Halter.

Eine zweckmäßige Maßnahme sieht vor, dass eine Lagerung des Fixierkörpers oder des Lösekörpers oder beiden durch das Kupplungsarmlagerelement geleistet wird. Beispielsweise ist am Kupplungsarmlagerelement eine Lageraufnahme für den Fixierkörper oder den Lösekörper vorgesehen. In die Lageraufnahme steht zweckmäßigerweise der bereits erwähnte Führungskörper vor. Somit sind also der Fixierkörper und/oder der Lösekörper zweckmäßigerweise in einem Zwischenraum zwischen dem Führungskörper und der Lageraufnahme des Kupplungsarmlagerelements aufgenommen.

Zweckmäßigerweise bildet der Fixierkörper einen Klemmkörper, der mit dem Kupplungsarmlagerelement zusammenwirkt, insbesondere mit einem Lagerabschnitt desselben, wobei der Fixierkörper und das Kupplungsarmlagerelement in der Fixierstellung einen Widerlagerkörper des Halters insbesondere sandwichartig klemmen.

Zweckmäßigerweise ist ein insbesondere am Halter befestigter Stützkörper, beispielsweise ein Deckel, vorgesehen, an dem der Lösekörper oder der Fixierkörper in der Lösestellung anschlägt, um den Stellweg des Lösekörpers oder Fixierkörpers in Richtung der Lösestellung zu begrenzen.

Der Fixierantrieb ist zweckmäßigerweise durch eine Federanordnung in Richtung der Fixierstellung belastet. Beispielsweise ist eine Feder oder Federanordnung vorgesehen, die den Antriebskörper in Richtung der Fixierstellung betätigt. Zweckmäßigerweise stützt sich diese Feder an dem vorgenannten Stützkörper oder Deckel ab. Es ist aber auch möglich, dass der Fixierantrieb durch eine Federanordnung in Richtung der Lösestellung belastet ist.

Die Anhängekupplung weist zweckmäßigerweise eine Fixiereinrichtung zum ortsfesten Fixieren des Kupplungsarms am Halter in der Gebrauchsstellung und/oder der Nichtgebrauchsstellung auf, wobei in einer Fixierstellung der Fixiereinrichtung ein am Halter ortsfest angeordneter Widerlagerkörper zwischen einen Fixierkörper der Fixiereinrichtung und das Kupplungsarmlagerelement geklemmt ist und in einer Lösestellung freigegeben ist, wobei in der Fixierstellung eine Fixierstützfläche des Fixierkörpers an einer Fixierwiderlagerfläche des Widerlagerkörpers und eine Stützfläche des Kupplungsarmlagerelements an einer Widerlagerfläche des Widerlagerkörpers anliegen, so dass das Kupplungsarmlagerelement bezüglich des Halters in der Lösestellung schwenkbeweglich und in der Fixierstellung ortsfest festgelegt ist.

Bei der Fixiereinrichtung ist vorteilhaft vorgesehen, dass in der Fixierstellung die Stützfläche des Kupplungsarmlagerelements und die Widerlagerfläche des Widerlagerkörpers flächig aneinander anliegen und kein Kontakt zwischen dem Kupplungsarmlagerelement und dem Fixierkörper vorhanden ist.

Es ist dabei ein Grundgedanke, dass das Kupplungsarmlagerelement am Widerlagerkörper flächig abgestützt ist, sodass der Kupplungsarm in der Fixierstellung eine optimale Abstützung am Halter erfährt. Gleichzeitig wird eine statische Überbestimmung dadurch vermieden, dass zwischen dem Kupplungsarmlagerelement und dem Fixierkörper ein Abstand, jedenfalls kein Kontakt vorhanden ist, sodass der Widerlagerkörper zwischen den Fixierkörper und das Kupplungsarmlagerelement geklemmt ist, gleichzeitig aber die Position des Kupplungsarmlagerelements bezüglich des Halters nur durch die aneinander anliegenden Flächen, nämlich die Widerlagerfläche und die Stützfläche, definiert ist.

An der Stützfläche des Kupplungsarmlagerelements und der Widerlagerfläche des Widerlagerkörpers sind vorteilhaft keine Formschlusskonturen und Gegen-Formschlusskonturen vorgesehen.

Eine vorteilhafte und in der Zeichnung dargestellte Ausführungsform der Erfindung sieht vor, dass das Kupplungsarmlagerelement bezüglich mindestens einer Schwenkachse oder der einzigen Schwenkachse in der Halterlageraufnahme des Halters unverschieblich aufgenommen ist. Zwischen dem Kupplungsarmlagerelement und der Halterlageraufnahme selbst sind zweckmäßigerweise keinerlei Formschlusskonturen vorgesehen, so dass das Kupplungsarmlagerelement in der Halterlageraufnahme ohne Widerstand dreht. Die Stützflächen und Widerlagerflächen des Widerlagerkörpers sind also ohne Formschlusskonturen ausgestaltet, die bei einer Drehbewegung um die Schwenkachse beispielsweise Geräusche erzeugen würden, wenn sie aneinander vorbei gleiten.

Bevorzugt ist es, wenn die Widerlagerfläche und die Stützfläche Lagerflächen des Schwenklagers bilden, die beim Schwenken des Kupplungsarms zwischen der Gebrauchsstellung und der Nichtgebrauchsstellung aneinander entlang gleiten. Somit ist die Position des Kupplungsarms relativ zum Halter stets durch die aneinander entlang gleitenden Lagerflächen definiert.

Es ist vorteilhaft, wenn das Kupplungsarmlagerelement in einen Innenraum der Halterlageraufnahme eingreift, wobei an einem Innenumfang der Halterlageraufnahme und einem Außenumfang des Kupplungsarmlagerelements eine Lagernut und ein Lagervorsprung zur drehbaren Lagerung des Kupplungsarmlagerelements in der Halterlageraufnahme um die Schwenkachse oder einer Schwenkachse ineinander eingreifen. Ein vorteilhafter Aspekt ist es dabei, wenn die Lagernut und der Lagervorsprung die vorgenannten Lagerflächen bereitstellen, also die Stützfläche und die Widerlagerfläche.

Eine bevorzugte Ausführungsform der Erfindung sieht vor, dass die Stützfläche des Kupplungsarmlagerelements und/oder die Widerlagerfläche des Widerlagerkörpers und/oder die Fixierstützfläche des Fixierkörpers flanschartige und/oder ringförmige Planflächen bilden oder als solche Planflächen ausgestaltet sind. Die einander gegenüberliegenden sowie aneinander anliegenden Flächen des Widerlagerkörpers und des Fixierkörpers sind zwar bei dieser Ausgestaltung im Wesentlichen plan, können aber durchaus auch Formschlusskonturen aufweisen, beispielsweise zu einander passende Kugeln und Kugelkalotten oder dergleichen. Das wird noch erläutert.

Es ist aber auch möglich, dass die Stützfläche des Kupplungsarmlagerelements und/oder die Widerlagerfläche des Widerlagerkörpers und/oder die Fixierstützfläche des Fixierkörpers teilringförmig ausgestaltet sind. Beispielsweise können diese in der Art von Ringsegmenten oder dergleichen ausgebildet sein.

Eine bevorzugte Ausführungsform der Erfindung sieht vor, dass der Fixierkörper mit dem Kupplungsarmlagerelement drehgekoppelt oder drehfest verbunden ist. Wenn sich also das Kupplungsarmlagerelement um die Schwenkachse dreht, dreht sich der Fixierkörper mit. Diese Maßnahme ist insbesondere mit der nachfolgenden Maßnahme vorteilhaft.

An dem Fixierkörper ist zweckmäßigerweise mindestens eine Formschlusskontur und an einer dem Fixierkörper zugewandten Seite des Widerlagerkörpers eine mindestens eine Gegen-Formschlusskontur angeordnet, die in der Fixierstellung formschlüssig ineinander eingreifen. Beispielsweise befinden sich die Formschlusskontur und die Gegen-Formschlusskontur an der Fixierstützfläche des Fixierkörpers und der Fixierwiderlagerfläche des Widerlagerkörpers. Es ist auch möglich, dass die Fixierstützfläche und die Fixierwiderlagerfläche durch mindestens eine Formschlusskontur und mindestens eine Gegen-Formschlusskontur gebildet sind. Zweckmäßigerweise ist dabei vorgesehen, dass die mindestens eine Formschlusskontur und die mindestens eine Gegen-Formschlusskontur kein Drehspiel des Fixierkörpers relativ zum Widerlagerkörper zulassen. Mithin sind also die Formschlusskontur und die Gegen-Formschlusskontur drehfest miteinander verbunden. Der Kupplungsarm ist also bezüglich des Halters formschlüssig drehfest festgelegt.

Die Formschlusskonturen und/oder die Gegen-Formschlusskonturen sind zweckmäßigerweise so ausgestaltet, dass sie bei Verschleiß nachstellend wirken. Beispielsweise sind entsprechende Schrägflächen vorgesehen, die bei Verschleiß aneinander entlang gleiten. Somit ist es ohne weiteres möglich, dass die Formschlusskonturen und die Gegen-Formschlusskonturen auch bei längerem Gebrauch der Anhängekupplung sozusagen satt und fest aneinander anliegen.

Die mindestens eine Formschlusskontur und die mindestens eine Gegen-Formschlusskontur bilden sozusagen eine Sicherheitsmaßnahme bzw. eine zusätzliche Verdrehsicherung. Es ist auch möglich, dass als Verdrehsicherung ausschließlich die mindestens eine Formschlusskontur und die mindestens eine Gegen-Formschlusskontur vorgesehen sind.

Eine Möglichkeit besteht darin, dass in der Fixierstellung auch die Fixierstützfläche und die Fixierwiderlagerfläche ausschließlich flächig aneinander anliegen, das heißt dass die Formschlusskontur und die Gegen-Formschlusskontur sozusagen inaktiv sind.

Beispielsweise ist dann zwischen den Formschlusskonturen und Gegen-Formschlusskonturen in Umfangsrichtung bezüglich einer Schwenkachse des Schwenklagers noch ein gewisses Drehspiel vorhanden, das erst dann sozusagen aufgebraucht ist, wenn eine über ein vorbestimmtes Maß hinausgehende Drehbelastung auf die aneinander anliegenden Flächen, die Fixierstützfläche und die Fixierwiderlagerfläche, einwirkt. Beispielsweise schlagen dann ineinander eingreifende Rippen und Nuten des Fixierkörpers und des Widerlagerkörpers im Sinne einer Drehbewegung des Fixierkörpers relativ zum Halter aneinander an. Die mindestens eine Formschlusskontur und die mindestens eine gegen Formschlusskontur sind zu einer Drehmomentabstützung vorteilhaft bezüglich der oder einer Schwenkachse des Schwenklagers zwischen dem Widerlagerkörper und dem Fixierkörper bei einem ein vorbestimmtes Maß überschreitenden Drehmoment zwischen Widerlagerkörper und Fixierkörper vorgesehen.

Zweckmäßigerweise sind parallele aneinander anliegende Stützflächen und Widerlagerflächen vorgesehen.

Die Stützfläche des Kupplungsarmlagerelements und die zugeordnete Widerlagerfläche des Widerlagerkörpers sowie die Fixierstützfläche des Fixierkörpers und die zugeordnete Fixierwiderlagerfläche des Widerlagerkörpers sind vorzugsweise parallel zueinander. Dies schließt allerdings nicht aus, dass zwischen mindestens einem der Paarungen dieser vorgenannten Flächen Formschlusskonturen und Gegen-Formschlusskonturen wirksam sind. Beispielsweise sind in einer bevorzugten Ausführungsform zwischen der Fixierwiderlagerfläche des Widerlagerkörpers und der Fixierstützfläche des Fixierkörpers Formschlusskonturen und Gegen-Formschlusskonturen in Eingriff, wenn die Fixierstellung erreicht ist. Die Formschlusskonturen und Gegen-Formschlusskonturen sind an der Fixierwiderlagerfläche und der Fixierstützfläche angeordnet, z.B. in Gestalt von vorstehenden Rippen und zugeordneten Nuten, vorstehenden kugeligen Bereichen, insbesondere Kugeln, und zugeordneten Kugelkalotten oder dergleichen.

Wie erwähnt können also an in der Fixierstellung aneinander anliegenden Flächen, nämlich der Paarung aus Stützfläche des Kupplungsarmlagerelements und Widerlagerfläche des Widerlagerkörpers und/oder der Paarung aus Fixierwiderlagerfläche und Fixierstützfläche Formschlusskonturen und Gegen-Formschlusskonturen angeordnet sein.

Als Formschlusskontur und Gegen-Formschlusskontur eignen sich beispielsweise Kugeln und Kugelkalotten, Rippen, insbesondere ausgerundete Rippen, oder dergleichen. Besonders bevorzugt ist es, wenn bezüglich der Schwenkachse oder einer jeweiligen Schwenkachse in einem Winkelabstand mehrere Formschlusskonturen und Gegen-Formschlusskonturen vorgesehen sind.

Eine bevorzugte Variante der Erfindung sieht vor, dass an dem Kupplungsarmlagerelement ein Fixierantrieb zum Betätigen der Fixiereinrichtung, insbesondere des Fixierkörpers, zwischen der Fixierstellung und der Lösestellung angeordnet ist. Es versteht sich, dass auch das Kupplungsarmlagerelement zwischen der Lösestellung und der Fixierstellung beweglich sein kann, beispielsweise entlang der oder einer Schwenkachse linear verschieblich. Bevorzugt ist es jedoch, wenn das Kupplungsarmlagerelement bezüglich der Schwenkachse oder einer jeweiligen Schwenkachse linear ortsfest oder unverschieblich ist.

Das Kupplungsarmlagerelement ist in der Fixierstellung auf der einen Seite des Widerlagerkörpers abgestützt, beispielsweise durch eine Drehlagerung, während der Fixierkörper sich von der anderen Seite am Widerlagerkörper abstützt.

Es ist vorteilhaft vorgesehen, dass der Widerlagerkörper eine Durchtrittsöffnung aufweist, durch die hindurch der Fixierkörper vor das Kupplungsarmlagerelement vorsteht. Somit ist also auf der einen Seite der Durchtrittsöffnung im Wesentlichen das Kupplungsarmlagerelement angeordnet, auf der anderen Seite der Durchtrittsöffnung oder des Widerlagerkörpers der Fixierkörper.

Zweckmäßigerweise ist der Fixierkörper zwischen der Lösestellung und der Fixierstellung ausschließlich linear betätigbar. Denkbar ist es aber auch, dass der Fixierkörper zwischen der Lösestellung in der Fixierstellung drehbeweglich ist oder in Kombination drehbeweglich und schiebebeweglich gelagert ist.

Zweckmäßigerweise ist vorgesehen, dass der Fixierantrieb eine Federanordnung zum Betätigen des Fixierkörpers in Richtung der Fixierstellung aufweist.

Der Fixierkörper ist zweckmäßigerweise an dem Kupplungsarmlagerelement bezüglich der Lagerachse, insbesondere der Schwenkachse, verdrehsicher gehalten. Die Verdrehsicherung ist zumindest in der Fixierstellung gegeben. Es ist denkbar, dass der Fixierkörper auf einem Stellweg zwischen der Gebrauchsstellung und der Nichtgebrauchsstellung abschnittsweise nicht verdrehsicher bezüglich des Kupplungsarmlagerelements ist, jedoch in der jeweiligen zur Fixierung vorgesehenen Stellung, der Gebrauchsstellung und/oder Nichtgebrauchstellung, verdrehsicher mit dem Kupplungsarmlagerelement gekoppelt ist.

Zweckmäßigerweise ist vorgesehen, dass der Fixierkörper an dem Kupplungsarmlagerelement verschieblich, insbesondere parallel zu einer Schwenkachse oder entlang einer Schwenkachse des Kupplungsarmlagerelements bezüglich der Halterlageraufnahme bzw. des fahrzeugseitigen Halters, gelagert ist.

Es ist aber auch möglich, dass der Fixierkörper relativ zum Halter verdrehsicher ist, d.h. dass er sich nicht mit dem Kupplungsarm mitdreht.

Eine bevorzugte Ausführungsform der Erfindung sieht vor, dass ein Verstellweg des Fixierkörpers so ausgestaltet ist, dass zwischen dem Widerlagerkörper und dem Fixierkörper vorhandene Formschlusskonturen in der Lösestellung außer Eingriff sind und bleiben. Somit kann also der Fixierkörper frei am Widerlagerkörper vorbei drehen, wenn der Kupplungsarm gedreht wird und der Fixierkörper mit dem Kupplungsarmlagerelement verdrehsicher gekoppelt ist.

Eine bevorzugte Ausführungsform der Erfindung sieht vor, die eine an sich eigenständige Erfindung darstellt, dass zwischen dem Fixierkörper einerseits und dem Kupplungsarmlagerelement andererseits ein Gleitkörper, insbesondere ein hülsenförmiger Gleitkörper, vorgesehen ist, um die Lagerung zwischen dem Fixierkörper und dem Kupplungsarmlagerelement zu verbessern und/oder einen direkten Kontakt, der zu einer elektrolytischen Reaktion führen könnte, zu vermeiden.

Der fahrzeugseitige Halter der Anhängekupplung weist zweckmäßigerweise eine Durchtrittsöffnung auf. Beispielsweise umfasst der Halter ein plattenartiges Tragelements mit einer Durchtrittsöffnung. Der Widerlagerkörper kann in oder an der Durchtrittsöffnung angeordnet sein.

Der Widerlagerkörper ist zweckmäßigerweise ringförmig, hat also eine Durchtrittsöffnung.

Durch die Durchtrittsöffnung des Widerlagerkörpers hindurch sind das Kupplungsarmlagerelement und der Fixierkörper miteinander verbunden. Beispielsweise steht ein Abschnitt des Kupplungsarmlagerelements durch die Durchtrittsöffnung hindurch bis zu dem Fixierkörper vor oder durchdringt der Fixierkörper die Durchtrittsöffnung und steht bis zu dem Kupplungsarmlagerelement vor.

Bevorzugt ist eine Anordnung getroffen, bei der der Fixierkörper nur in einer einzigen Drehwinkelposition am Kupplungsarmlagerelement montierbar ist. Hierzu sind beispielsweise Verdrehsicherungskonturen am Innenraum einer Lageraufnahme des Kupplungsarmlagerelements für den Fixierkörper und am darin aufgenommenen Außenumfang des Fixierkörpers vorgesehen. Zweckmäßigerweise ist vorgesehen, dass das Kupplungsarmlagerelement nicht vollständig in der Halterlageraufnahme aufgenommen ist, was prinzipiell natürlich geht, sondern dass das Kupplungsarmlagerelement mit einem den Kupplungsarm tragenden Abschnitt vor die Halterlageraufnahme vorsteht. Dieser vorstehende Abschnitt eignet sich optimal dazu, den Kupplungsarm zu tragen.

Es ist möglich, dass der Kupplungsarm mit dem Kupplungsarmlagerelement lösbar verbunden ist, beispielsweise verschraubt. Somit ist es möglich, unterschiedlich ausgestattete Kupplungsarme an dem Kupplungsarmlagerelement anzuordnen. Ein Kupplungsarm ist nämlich üblicherweise an die Bauform und/oder die geometrischen Verhältnisse des jeweiligen Kraftfahrzeugs angepasst. Somit kann je nach Bedarf ein Kupplungsarm gewählt werden, der zum jeweiligen Fahrzeugtyp passt. Der Halter und das Schwenklager bilden in diesem Fall zweckmäßigerweise eine Art Modul oder Lagermodul, das für verschiedene Anhängekupplungen verwendbar ist.

Es ist aber auch möglich, dass das Kupplungsarmlagerelement und der Kupplungsarm eine integrale Einheit sind. Beispielsweise ist es möglich, ein Gussteil und/oder Schmiedeteil herzustellen, das zugleich den Kupplungsarm und das Kupplungsarmlagerelement bildet.

Eine bevorzugte Ausführungsform der Erfindung sieht vor, dass das Kupplungsarmlagerelement ausschließlich innen in der Halterlageraufnahme gelagert ist und kein Lagerelement des Halters in das Kupplungsarmlagerelement eingreift. Somit ist also eine reine Außenlagerung des Kupplungsarmlagerelements realisiert, die sich von den typischen Lagerkonzepten, bei denen der Kupplungsarm sozusagen außen auf einem halterseitigen Lagerzapfen oder einer Lagerwelle sitzt, unterscheidet.

An dem Kupplungsarm ist beispielsweise eine Kupplungskugel zum Anhängen eines Anhängers oder Aufsätzen eines Lastenträgers angeordnet. Am Kupplungsarm kann aber auch eine Steckaufnahme oder ein sonstiges Befestigungselement vorgesehen sein, insbesondere dann, wenn der Kupplungsarm zum Ankuppeln eines Lastenträgers vorgesehen ist.

Bevorzugt steht der Kupplungsarm vom Kupplungsarmlagerelement mit mindestens einem Bogenabschnitt ab.

Der Widerlagerkörper kann einen festen, beispielsweise einstückigen, Bestandteil des Halters bilden. Beispielsweise ist der Widerlagerkörper von einem Abschnitt einer Halterplatte des fahrzeugseitigen Halters gebildet. Es ist aber auch möglich, dass der Widerlagerkörper als ein separates Bauteil ausgestaltet ist. Der Widerlagerkörper kann beispielsweise in eine Halterplatte eingesetzt, eingeschraubt, eingeklebt, eingeschweißt oder dergleichen sein.

Nachfolgend werden Ausführungsbeispiele der Erfindung anhand der Zeichnung erläutert. Es zeigen:
- Figur 1: eine perspektivische Schrägansicht einer Anhängekupplung von schräg oben hinten (mit Sicht von hinten oben auf ein Heck eines Kraftfahrzeugs),
- Figur 2: die Anhängekupplung gemäß Figur 1 frontal (mit Sicht auf ein Heck eines Kraftfahrzeugs),
- Figur 3: eine Schnittdarstellung der Anhängekupplung gemäß Figur 2 in einer Fixierstellung oder verriegelten Stellung, etwa entlang einer Schnittlinie A-A,
- Figur 4: die Anhängekupplung entsprechend Figur 3, jedoch in einer Lösestellung oder entriegelnden Stellung,
- Figur 5: eine Explosionsdarstellung der Anhängekupplung gemäß der vorstehenden Figuren,

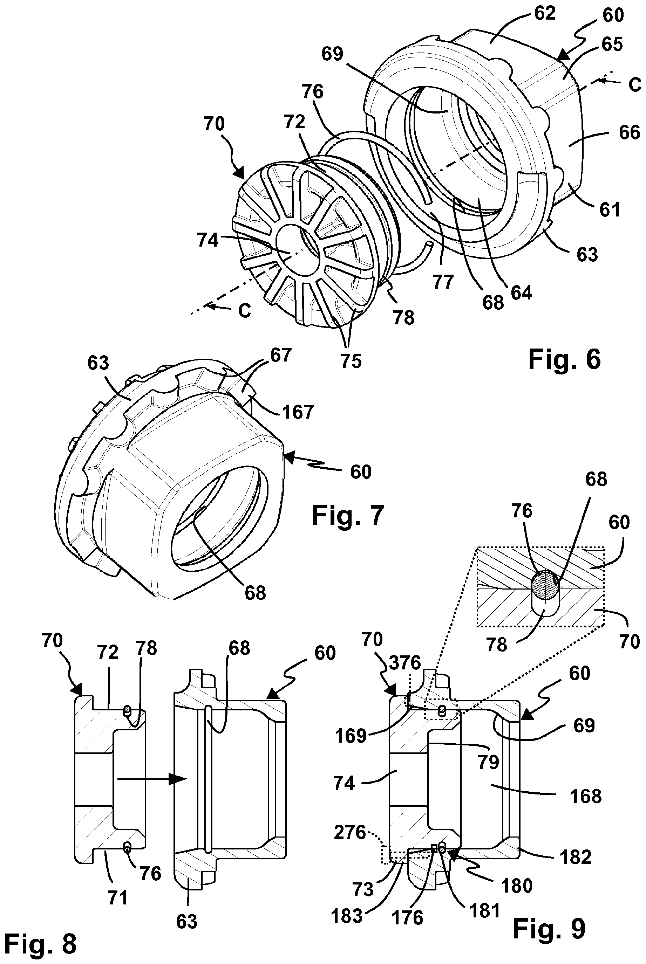

- Figur 6: eine perspektivische Schrägdarstellung eines Fixierkörpers und eines Lösekörpers der Anhängekupplung,
- Figur 7: den Fixierkörper gemäß Figur 6, jedoch schräg von einer entgegengesetzten Seite her dargestellt,
- Figur 8: eine Schnittdarstellung durch die Anordnung gemäß Figur 6, etwa entlang einer Schnittlinie C-C, wobei der Fixierkörper und der Lösekörper noch voneinander getrennt sind,
- Figur 9: die Anordnung gemäß Figur 8, jedoch im montierten Zustand, und
- Figur 10: einen Schnitt durch die Anhängekupplung gemäß Figur 2 entlang einer Schnittlinie B-B, und
- Figur 11: eine Schnittansicht etwa entsprechend den Figuren 3, 4 eines weiteren Ausführungsbeispiels einer Anhängekupplung mit einem Rast-Montagekonzept.

Eine Anhängekupplung 10 weist einen Halter 11 auf, der an einem Querträger 13 einer Trägeranordnung 14 befestigt ist, beispielsweise verschraubt, verschweißt oder in sonstiger Weise ortsfest festgelegt. Der Halter 11 umfasst beispielsweise ein Trägerelement 12, insbesondere eine Trägerplatte. Selbstverständlich könnte auch ein anderer Halter oder ein anderes Trägerelement vorgesehen sein, beispielsweise ein röhrenförmiges Trägerelement oder dergleichen.

Der Querträger 13 erstreckt sich am Heck 202 eines Kraftfahrzeugs 200 quer zu dessen Fahrtrichtung. Beispielsweise ist der Querträger 13 anhand von Seitenträgern (nicht dargestellt) an einer Karosserie 203 des Kraftfahrzeugs 200 befestigt. Die Seitenträger erstrecken sich beispielsweise längs der Fahrtrichtung des Kraftfahrzeugs 200. Die Trägeranordnung 14 ist vorteilhaft verdeckt hinter einem Stoßfänger 201 angeordnet.

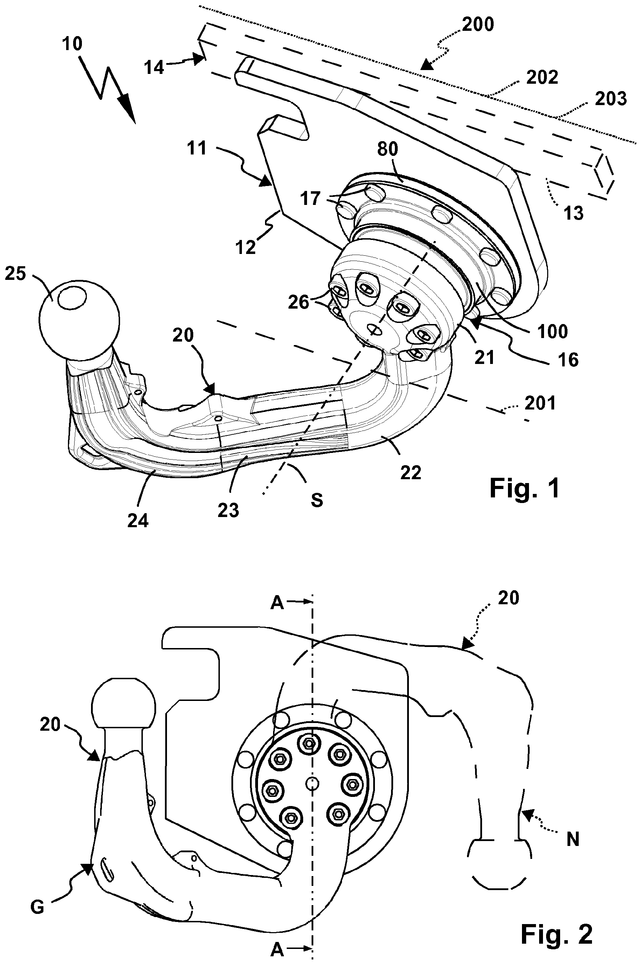

Am Halter 10 ist ein Schwenklager 16 vorgesehen, um einen Kupplungsarm 20 schwenkbar um eine Schwenkachse S zu lagern, sodass der Kupplungsarm 20 in einer Gebrauchsstellung G nach hinten vor den Stoßfänger 201 vorsteht, beispielsweise um einen Anhänger anzukuppeln oder einen Lastenträger auf ein Kuppelelement oder einen Kuppelkörper 25 am freien Endbereich des Kupplungsarms an sich zu befestigen. Aus der Gebrauchsstellung G ist der Kupplungsarm 20 in Richtung einer Nichtgebrauchsstellung N anhand des Schwenklagers 16 schwenkbar, sodass er beispielsweise die in Figur 2 gestrichelt dargestellte Nichtgebrauchsstellung N einnimmt. Dann ist der Kupplungsarm 20 beispielsweise im Wesentlichen hinter dem Stoßfänger 201 verborgen.

Die Schwenkachse S steht exemplarisch für eine beliebige Lagerachse. Mithin eignen sich die später noch erläuterten Konzepte zur Fixierung des Kupplungsarms 20 in der Gebrauchsstellung G und/oder Montagekonzepte der Anhängekupplung 10 auch für Anhängekupplungen, bei denen das Lager eine mehrachsige Schwenkbarkeit und/oder eine Verschieblichkeit, zum Beispiel eine ausschließlich Verschieblichkeit oder eine Verschieblichkeit kombiniert mit einer Schwenkbarkeit um eine Schwenkachse, des Kupplungsarms relativ zum Halter bereitstellt.

Anstelle des Schwenklagers 16 könnte z.B. bei einer erfindungsgemäßen Anhängekupplung auch ein Schwenk-Schiebelager vorgesehen sein, sodass der Kupplungsarm 20 beispielsweise entlang der Schwenkachse S verschieblich und schwenkbar um die Schwenkachse S gelagert ist. Weiterhin ist eine Lagerung um mehrere Achsen, zum Beispiel eine kardanische Lagerung, durchaus in Bezug auf manche Aspekte der Erfindung, beispielsweise die Fixiereinrichtung 160 ebenfalls möglich, jedoch in der Zeichnung nicht dargestellt.

Der Kupplungsarm 20 weist einen Montageabschnitt 21 auf, mit welchem er am Schwenklager 16, konkret an einem Kupplungsarmlagerelement 40, befestigt ist. Denkbar wäre auch eine Ausführungsform, bei der der Kupplungsarm 20 und das Kupplungsarmlagerelement 40 einstückig sind.

Vom Montageabschnitt 21 weg erstreckt sich ein Krümmungsabschnitt 22, anschließend ein Armabschnitt 23 der im Wesentlichen geradlinig verläuft sowie ein weiterer Krümmungsabschnitt 24 zwischen dem Armabschnitt 23 und dem Kuppelkörper 25, der vorliegend als Kupplungskugel ausgestaltet ist. Anstelle des Kuppelkörpers 25 in Gestalt einer Kugel könnte auch eine Steckaufnahme, ein Steckvorsprung oder dergleichen anderes Kuppelelement zum Ankuppeln eines Lastenträgers oder Anhängers vorgesehen sein.

Zur lösbaren Befestigung des Kupplungsarms 20 an dem Kupplungsarmlagerelement 40 sind beispielsweise Schrauben 26 vorgesehen, die Durchtrittsöffnungen 27 des Montageabschnitts 21 durchdringen und in Schraubaufnahmen 42 des Kupplungsarmträgers oder Kupplungsarmlagerelements 40 eingeschraubt sind. Der Montageabschnitt 21 ist beispielsweise in der Art eines Deckels ausgestaltet oder topfförmig. Der Montageabschnitt 21 weist vorliegend einen im Wesentlichen kreisrunden Außenumfang auf. Am Außenumfang des Montageabschnitts 21 sind die Schrauben 26 beispielsweise im Wesentlichen ringförmig nebeneinander angeordnet, sodass der Montageabschnitt 21 optimal am Kupplungsarmlagerelement 40 abgestützt und befestigt ist.

Ein Grundkörper 41 des Kupplungsarmlagerelements 40 ist in einem Lagerkörper 100 des Halters 11 beweglich gelagert, vorliegend um die Schwenkachse S drehbar gelagert. Der Grundkörper 41 weist jedoch eine derartige Länge auf, dass er prinzipiell auch entlang der Schwenkachse S verschieblich in dem Lagerkörper 100, nämlich dessen Halterlageraufnahme 104, gelagert sein könnte.

Die Halterlageraufnahme 104 weist eine Durchtrittsöffnung 102 für das Kupplungsarmlagerelement 40 auf. Das Kupplungsarmlagerelement 40 durchdringt also die Halterlageraufnahme 104.

An einem Innenumfang der Halterlageraufnahme 104 ist eine Lagernut 105 ausgebildet, in die ein Lagervorsprung 43 des Kupplungsarmlagerelements 40 eingreift.

Neben dem Lagervorsprung 43 erstreckt sich ein Lagerabschnitt 49 am Außenumfang des Grundkörpers 41 oder des Kupplungsarmlagerelements 40, der in einem Lagerabschnitt 106 des Lagerkörpers 100 aufgenommen ist und dort schwenkbeweglich gelagert ist. Der Lagerabschnitt 106 weist bezüglich der Schwenkachse S vorzugsweise eine größere Längserstreckung auf als der Lagervorsprung 43. In Bezug auf die Schwenkachse S ist also der Lagerabschnitt 106 zweckmäßigerweise etwas breiter als der Lagervorsprung 43.

Dennoch stellt der Lagervorsprung 43 eine optimale Lagerung in der Halterlageraufnahme 104 bereit, weil er nämlich in Bezug zur Schwenkachse S einen großen Radialabstand und somit eine große effektive Gleitfläche zum Lagern des Kupplungsarmlagerelements 40 am Lagerkörper 100 und somit am Halter 11 bereitstellt.

Vor den Lagerabschnitt 49 steht ein Abschnitt 49b des Kupplungsarmlagerelements 40 vor, an dem der Kupplungsarm 20 mit dem Montageabschnitt 21 befestigt ist. Der Abschnitt 49b bildet sozusagen den freien Endbereich des Grundkörpers 41 oder den Tragbereich für den Kupplungsarm 20.

Der Lagerkörper 104 ist auf den fahrzeugfesten Halter 11, konkret die Platte oder das Trägerelement 12 sozusagen aufgeschraubt. Zwischen dem Lagerkörper 104 und dem Trägerelement 12 sind ein Widerlagerkörper 80 sowie ein Stützkörper 90 gehalten, die sozusagen sandwichartig zwischen dem Lagerkörper 104 und dem Halter 11 bzw. dem Trägerelement 12 gehalten sind.

Dieser sozusagen schichtartige Aufbau der Anhängekupplung 10 lässt sich leicht montieren.

Der Lagerkörper 104 ist vorliegend hülsenartig ausgestaltet. Er weist einen nach radial außen vorstehenden Montageflansch 101 auf, der an seinem Außenumfang verteilt mehrere Schrauböffnungen 103 aufweist. Die Schrauböffnungen 103 dienen zum Anschrauben des Lagerkörpers 104 an das Trägerelement 12.

Die Schrauböffnungen 103 sind von Schrauben 17 durchdrungen, deren Köpfe sich am Montageflansch 101 abstützen und Durchtrittsöffnungen 82 des Widerlagerkörpers 80, Schrauböffnungen 93 des Stützkörpers 90 sowie Schrauböffnungen 15 an der Trägerplatte oder dem Trägerelement 12 durchdringen, wobei auf die freien Enden der Schrauben 17 Muttern 18 aufgeschraubt sind. Anstelle oder in Ergänzung zu den Schrauben 17 könnten selbstverständlich auch Nieten vorgesehen sein.

Der Stützkörper 90 hat einen Boden 92, von dem nach radial außen ein Montageflansch 91 absteht. An dem Montageflansch 91 sind die Schrauböffnungen 93 vorgesehen. Der Stützkörper 90 ist trichterförmig oder in der Art eines Deckels 98 ausgestaltet, der sozusagen das Schwenklager 16 von hinten her, entgegengesetzt zum Kupplungsarm 20, abdeckt. Der Boden 92 steht im Wesentlichen durch eine Durchtrittsöffnung 19 des Trägerelements 12 hindurch nach hinten vor das Trägerelement 12 vor.

Der Widerlagerkörper 80 ist beispielsweise als ein Ring 81 ausgestaltet. Der äußere Randbereich des Rings 81 weist die Durchtrittsöffnungen 82 für die Schrauben 17 auf und stützt sich am Außenumfang der Durchtrittsöffnung 19 an dem Trägerelement 12 ab. Der Widerlagerkörper 80 hat ebenfalls eine Durchtrittsöffnung 84, die mit der Durchtrittsöffnung 19 fluchtet.

Der Widerlagerkörper 80 weist an seiner dem Kupplungsarmlagerelement 40 zugewandten Seite eine Widerlagerfläche 86 auf, die zugleich eine Drehlagerfläche für den Lagervorsprung 43 bildet. Die Widerlagerfläche 86 liegt nämlich einer Lagerfläche 108 des Lagerkörpers 100 gegenüber, wobei die Widerlagerfläche 86 und die Lagerfläche 108 seitlich die Lagernut 105 begrenzen.

Der Widerlagerkörper 80 bildet einen ersten Lagerkörper 85, der zusammen mit dem einen zweiten Lagerkörper bildenden Lagerkörper 100 insgesamt die Lagernut 105 ausbildet. Somit kann also das Kupplungsarmlagerelement 40 mit seinem flanschartigen Lagervorsprung 43 sozusagen auf den Widerlagerkörper 80 aufgesetzt werden, worauf dann der Lagerkörper 100 auf dem Kupplungsarmlagerelement 40 montiert wird und somit der Lagervorsprung 43 in der Lagernut 105 eingekammert ist. Das Kupplungsarmlagerelement 40 ist somit bequem am Halter 11 zu montieren. In Bezug auf die Schwenkachse S ist das Kupplungsarmlagerelement 40 somit unverschieblich, jedoch drehbar am Halter 11 gelagert.

Von dem Kupplungsarmlagerelement 40 steht in Richtung des Halters 11 ein Führungskörper 30 ab. Der Führungskörper 30 ist beispielsweise in der Art einer Hülse oder Welle ausgestaltet. Ein Kopf 31 des Führungskörpers 30 greift in eine Aufnahme 28 am Montageabschnitt 21 des Kupplungsarms 20 ein. Der Kopf 31 ist flanschartig ausgestaltet, sodass er zwischen eine Stirnseite des Grundkörpers 41 des Kupplungsarmlagerelements 40 und dem Boden der Aufnahme 28 sandwichartig gehalten ist. Der Führungskörper 30 wird also in Bezug auf die Montage in eine Durchtrittsöffnung 44 des Kupplungsarmlagerelements 40 eingesetzt, worauf dann der Kupplungsarm 20 am Grundkörper 41 des Kupplungsarmlagerelements 40 befestigt wird, sodass der flanschartige Kopf 31 zwischen der Stirnseite des Grundkörpers 41 und dem Boden der Aufnahme 28 gehalten ist. Das Kupplungsarmlagerelement 40 stützt sich mit seiner Stirnseite an einem Stützanschlag oder einer Stützschulter 36 des Führungskörpers 30 ab.

Der Führungskörper 30 weist einen Rohrkörper 32 auf, in welchem ein Antriebskörper 112 eines Fixierantriebs 110 der Fixiereinrichtung 160 aufgenommen ist.

Die Fixiereinrichtung 160 umfasst einen Fixierkörper 60. Der Fixierkörper 60 und das Kupplungsarmlagerelement 40 nehmen den Widerlagerkörper 80 sozusagen in die Zange, wenn die Fixiereinrichtung 160 ihre Fixierstellung F einnimmt. Dann ist der Kupplungsarm 20 in der Gebrauchsstellung G oder der Nichtgebrauchsstellung N am Halter 11 ortsfest, nämlich drehfest, fixiert.

Der Fixierkörper 60 weist einen Fixiervorsprung 63 auf, der in der Art eines Flansches ausgestaltet ist und vor einen Betätigungsabschnitt 61 des Fixierkörpers 60 vorsteht. Der Fixiervorsprung 63 stellt den eigentlichen Fixierkörper dar, weil er sich in der Fixierstellung F an dem Widerlagerkörper 80 abstützt. An dem Fixiervorsprung 63 ist nämlich eine Fixierstützfläche 167 vorgesehen, die sich an einer Fixierwiderlagerfläche 83 des Widerlagerkörpers 80 in der Fixierstellung F abstützt.

Es wäre eine Verklemmung des Widerlagerkörpers 80 zwischen dem Fixierkörper 60 und der Stützfläche 47 des Kupplungsarmlagerelements 40 möglich, um den Kupplungsarm 20 bezüglich des Halters 11 drehfest zu fixieren.

Vorteilhaft ist vorgesehen, dass am Fixiervorsprung 63, konkret der Fixierstützfläche 167, Formschlusskonturen 67 vorgesehen sind, die in Gegen-Formschlusskonturen 87 des Widerlagerkörpers 80 in der Fixierstellung F eingreifen. Wenn also der Fixierkörper 60 in die Fixierstellung F vom Fixierantrieb 110 bewegt wird, wird der Fixierkörper 60 zum Kupplungsarmlagerelement 40 hingezogen, wobei sich die Stützflächen 47 des Kupplungsarmlagerelements 40 an der planen Widerlagerfläche 86 des Widerlagerkörpers 80 von der einen Seite her und die Fixierstützfläche 167 des Fixierkörpers 60 an der Fixierwiderlagerfläche 83 des Widerlagerkörpers 80 von der anderen Seite her abstützen. Zusätzlich greifen noch die Formschlusskonturen 67 in die Gegen-Formschlusskonturen 87 ein, sodass eine sichere und unlösbare Verdrehsicherung gegeben ist.

Der Vorteil dieser Konstruktion ist es, dass das Kupplungsarmlagerelement 40 bezüglich der Schwenkachse S zwar drehbar ist, jedoch linear ortsfest ist und somit sozusagen nur ein Widerlager für den Fixierkörper 60 bereitstellt. Das Kupplungsarmlagerelement 40 ist also stets optimal vom Schwenklager 16 drehgelagert, sodass keinerlei Schlingerbewegungen oder dergleichen stattfinden. Insbesondere ist auf diesem Wege realisierbar, dass die Formschlusskonturen 67 und die Gegen-Formschlusskonturen 87 in der Lösestellung L der Fixiereinrichtung 160 vollständig außer Eingriff sind und somit bei der Drehbewegung oder Schwenkbewegung des Kupplungsarms 20 um die Schwenkachse S bezüglich des Halters 11 nicht aneinander entlang gleiten, was zum einen Reibung, zum andern auch Geräusche verursachen kann. Die Anhängekupplung 10 ist also quasi geräuschlos von der Gebrauchsstellung G in die Nichtgebrauchsstellung N oder umgekehrt verstellbar. Die Betätigungskräfte zur Verstellung zwischen der Gebrauchsstellung und der Nichtgebrauchsstellung sind entsprechend niedrig.

Gleichwohl ist eine optimale Fixierung gegeben, die zum einen durch die Formschlusskonturen 67 und die Gegen-Formschlusskonturen 87 realisiert ist, die sozusagen eine maximale Verdrehsicherung bereitstellen, zum andern aber auch durch den Klemmsitz, der dadurch realisiert ist, dass die Fixierstützfläche 167 an der Fixierwiderlagerfläche fest anliegt.

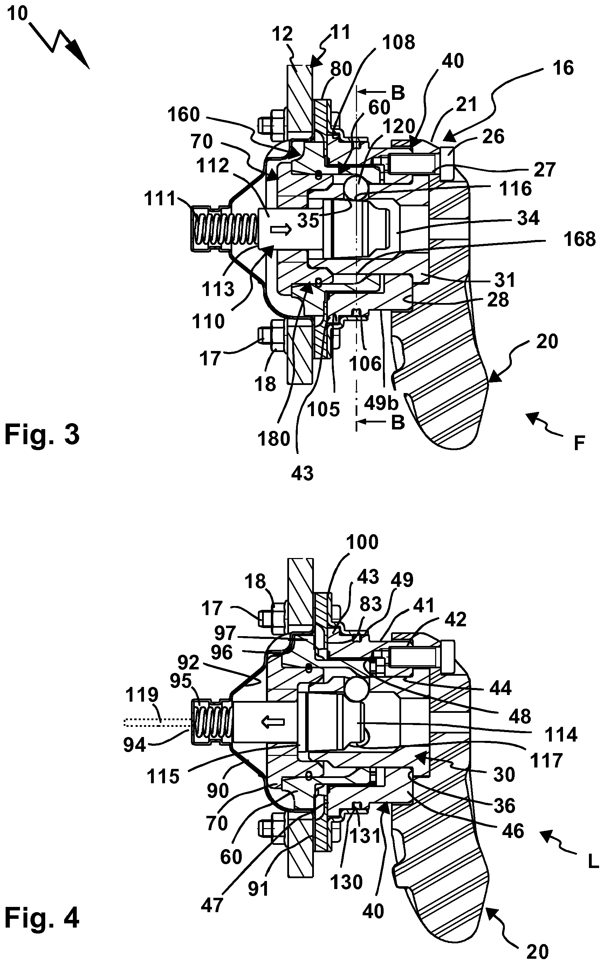

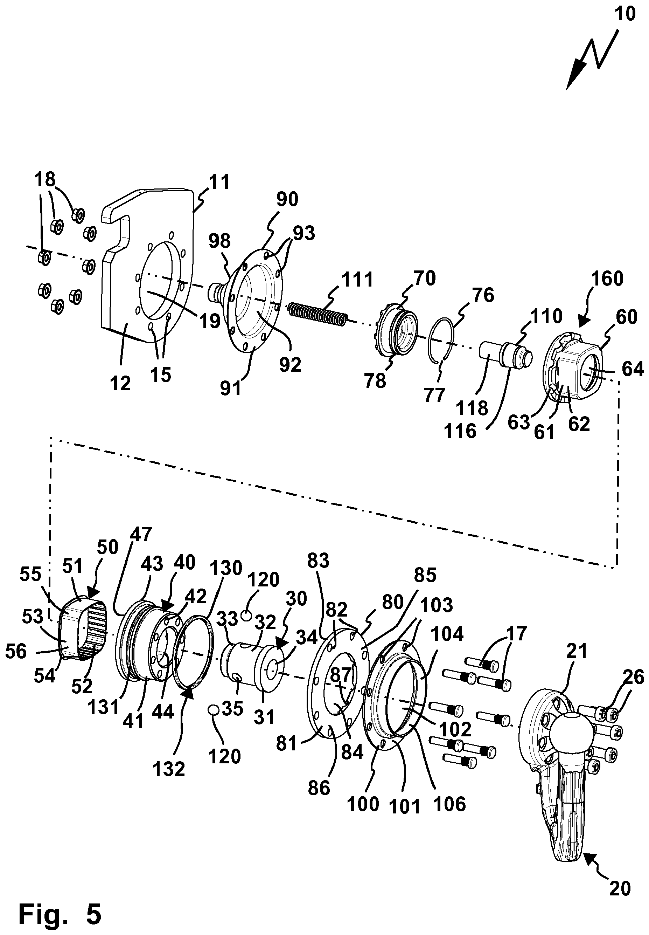

Die Formschlusskonturen 67 und die Gegen-Formschlusskonturen 87 können beispielsweise als Rippen und zugeordnete Nuten, Kugeln und zugeordnete Kugelkalotten, keilförmige Konturen oder dergleichen umfassen. Im Bereich der Gegen-Formschlusskonturen 87 kann der Widerlagerkörper 80 äußerst dünn ausgestaltet sein (ersichtlich beispielsweise im Querschnitt der Figuren 3 und 4 oder auch in Figur 5) so dass sich die Bodenbereiche der als Nuten ausgestalteten Gegen-Formschlusskonturen 87 zu dem Kupplungsarmlagerelement 40, nämlich der Stützfläche 47 hin insbesondere elastisch verformen können, sodass der Fixierkörper 60 und das Kupplungsarmlagerelement 40 den Widerlagerkörper 80 optimal klemmen können.

Eine vorteilhafte Konstruktion sieht vor, dass die Stützfläche 47 von einer Seitenflanke des Lagervorsprungs 43 bereitgestellt wird. Die Stützfläche 47 und die zugeordnete Widerlagerfläche 86 des Widerlagerkörpers 80 sowie die Fixierstützfläche 167 und die zugeordnete Fixierwiderlagerfläche 83 des Widerlagerkörpers 80 verlaufen vorzugsweise parallel. Die vorgenannten Flächen sind vorzugsweise rechtwinkelig zur Schwenkachse S, was nicht nur beim Ausführungsbeispiel, sondern auch bei anders ausgestalteten erfindungsgemäßen Anhängekupplungen vorteilhaft ist. Durch die flanschartige Ausgestaltung einerseits der wirksamen Fläche des Widerlagerkörpers 80, andererseits des Lagervorsprungs 43 und des Fixierkörpers 60 ist eine optimale und großflächige Abstützung in der Fixierstellung F und somit eine sichere Verriegelung und Fixierung des Kupplungsarms 20 am Halter 11 zumindest in der Gebrauchsstellung G, vorteilhaft auch in der Nichtgebrauchsstellung N gegeben.

Eine in der Zeichnung nicht dargestellte Ausführungsform der Erfindung kann vorsehen, dass die Formschlusskonturen 67 und die Gegen-Formschlusskonturen 87 ein Drehspiel bezüglich der Schwenkachse S zulassen. Somit wird der Kupplungsarm 20 durch die Fixiereinrichtung 160 am Halter 11 sozusagen verklemmt. Nur dann wenn eine über ein vorbestimmtes Maß hinausgehende Belastung auf den Kupplungsarm 20 und somit eine entsprechende Drehbelastung auf das Schwenklager 16 einwirkt, begrenzen die Formschlusskonturen 67 und die Gegen-Formschlusskonturen 87 eine entsprechende Drehbetätigung, wirken also als Verriegelung. Ansonsten liegt die Stützfläche 47 flächig an der Widerlagerfläche 86 und die Fixierstützfläche 167 an der Fixierwiderlagerfläche 83 flächig an und klemmen den Widerlagerkörper 80.

Zum Lösen des Fixierkörpers 60 ist ein Lösekörper 70 vorgesehen, der mit dem Fixierkörper 60 fest verbunden ist. Der Lösekörper 70 und der Fixierkörper 60 werden durch den Fixierantrieb 110 betätigt.

Der Antriebskörper 112 ist in einer als Längsführung ausgestalteten Führungsaufnahme 34 des Rohrkörpers 32 bzw. des Führungskörpers 30 längsverschieblich gelagert, wobei er bei einer Längsverschiebung in Richtung einer Verstellung der Fixiereinrichtung 160 zu einer Fixierstellung F (in Figur 3 nach rechts) Übertragungskörper 120 betätigt, so dass sie durch Führungskanäle 35 des Führungskörpers 30 nach radial außen verdrängt werden. Bei einer Verstellung in Richtung einer Lösestellung L der Fixiereinrichtung 160 (in Figur 3 oder 4 nach links) ist der Antriebskörper 112 so weit zurückverstellt, dass ein Rückzugsbereich 117 des Antriebskörpers 112 den Führungskanälen 35 gegenüber liegt und die Kugeln oder Übertragungskörper 120 wieder in den Führungskanälen 35 so weit zurück verstellt oder verstellbar sind, dass sie nicht oder nicht wesentlich vor den Außenumfang des Rohrkörpers 32 vorstehen.

Anstelle von Kugeln könnten auch Stifte, Rollen oder dergleichen als Übertragungskörper 120 dienen. Weiterhin ist es denkbar, dass bei einer erfindungsgemäßen Anhängekupplung ein Antriebskörper unmittelbar auf einen Fixierkörper einwirkt, beispielsweise einen Fixierkörper, der die Funktionalität des Fixierkörpers 60 der Fixiereinrichtung 160 aufweist.

Zum Betätigen des Fixierantriebs 110 in Richtung der Fixierstellung F ist eine Federanordnung vorgesehen. Beispielsweise ist der Antriebskörper 112 durch eine Feder 111 in Richtung der Fixierstellung F belastet. Die Feder 111 stützt sich an einer Stützfläche 113 eines Betätigungskopfs 114 des Antriebskörpers 112 ab. Am anderen Längsende ist die Feder 111 in einer Federaufnahme 95 des Stützkörpers 90 aufgenommen.

Zum Verstellen der Fixiereinrichtung 160 oder des Fixierantriebs 110 in Richtung der Lösestellung L dient ein Betätigungsorgan 119. Am Boden der Federaufnahme 95 ist beispielsweise eine Durchtrittsöffnung 94 für das Betätigungsorgan 119 vorgesehen. Das Betätigungsorgan 119 umfasst beispielsweise einen Seilzug oder Bowdenzug. Beispielsweise ist das Betätigungsorgan 119 an einem Bolzenabschnitt 118 des Antriebskörpers 112 befestigt. Die dem Seilzug oder Betätigungsorgan 119 zugewandte Rückseite des Bolzenabschnitts 118 stellt die Stützfläche 113 bereit.

Das Betätigungsorgan 119 ist beispielsweise manuell oder durch einen Antriebsmotor betätigbar. Ohne weiteres denkbar wäre es aber auch, den Antriebskörper 119 oder jedenfalls den Fixierantrieb 110 direkt motorisch zu betätigen, beispielsweise in die Fixierstellung F oder die Lösestellung L. Ein entsprechendes Übertragungsgetriebe, beispielweise ein Zahnradgetriebe, Seilzuggetriebe oder dergleichen zwischen einerseits dem insbesondere elektrischen Motor und andererseits dem Antriebskörper 119 ist in der Zeichnung aus Gründen der Vereinfachung nicht dargestellt.

Der Antriebskörper 112 ist zur Betätigung des Fixierkörpers 60, aber auch zur Betätigung des Lösekörpers 70 vorgesehen. Für die Übertragungskörper 120, die den Fixierkörper 60 in Richtung der Fixierstellung F verstellen, ist beispielsweise eine konische oder schräge Betätigungsfläche 116 am Betätigungskopf 114 vorgesehen. Vorzugsweise ist eine Schrägneigung der Betätigungsfläche 116 im Sinne einer Selbsthemmung ausgestaltet, d.h. dass eine Rückwirkung der Übertragungskörper 120 bei einer Kraftbeaufschlagung durch den Fixierkörper 60 in Richtung der Lösestellung nicht zu einer Verstellung des Betätigungskörpers 114 oder des Antriebskörpers 112 in Richtung der Lösestellung L führt.

Zwischen dem Antriebskörper 112 und dem Fixierkörper 60 ist ein Getriebe vorgesehen, das im Sinne einer Kraftverstärkung wirkt. Beispielsweise ist die Betätigungsfläche 116 als Schrägfläche oder Keilfläche ausgestaltet. Auch eine zugeordnete Fixierbetätigungsfläche 69 des Fixierkörpers 60 an dessen Innenumfang, auf die das Übertragungselement oder der Übertragungskörper 120, beispielsweise hier eine Kugel, einwirkt, ist schräg geneigt. Die Schrägflächen oder Keilflächen sind zweckmäßigerweise so ausgestaltet, dass sie im Sinne einer Kraftverstärkung wirken.

Zwischen dem Bolzenabschnitt 118 und dem Betätigungskopf 114 ist eine Stufe vorhanden, deren eine Stufenfläche, die quer zur Schwenkachse S verläuft, die zugleich eine Betätigungsachse oder Stellachse des Antriebskörpers 112 bildet, eine Betätigungsfläche 115 für den Lösekörper 70 bildet. Die Betätigungsfläche 115 wirkt auf eine Lösebetätigungsfläche 79 des Lösekörpers 70 ein

Bei einer Betätigung in Richtung der Lösestellung L schlägt der Fixierkörper 60 mit seiner Rückseite oder der dem Stützkörper 90 zugewandten Seite an einem Anschlag 97 an. Der Anschlag 97 ist beispielsweise durch eine Stufe des Stützkörpers 90 oder eine Stufe am Boden 92 gebildet. Alternativ oder ergänzend schlägt auch der Lösekörper 70 an einem Anschlag 97, beispielsweise ebenfalls einer Stufe, des Stützkörpers 90 an, wenn er in Richtung der Lösestellung L betätigt wird. Somit ist der Stellweg des Fixierkörpers 60 in Richtung der Lösestellung L begrenzt. Allerdings ist der Stellweg in Richtung der Lösestellung L vorzugsweise so ausgestaltet, dass die Gegen-Formschlusskonturen 87 und die Formschlusskonturen 67 vollständig außer Eingriff sind und somit die Schwenkbewegung des Kupplungsarms 20 bezüglich des Halters 11 nicht behindern.

Der Fixierkörper 60 ist bezüglich des Kupplungsarmlagerelements 40 verschieblich gelagert. Der Fixierkörper 60 greift mit einem Betätigungsabschnitt 61 in eine Lageraufnahme 48 des Kupplungsarmlagerelements 40 ein und ist dort verschieblich gelagert. Allerdings ist zwischen dem Fixierkörper 60 und dem Kupplungsarmlagerelement 40, also der Lageraufnahme 48, noch ein Gleitkörper 50 in der Art einer Gleitbuchse angeordnet. Der Gleitkörper 50 weist einen Grundkörper 51 auf, an dessen Innenumfang Rippen 52 vorgesehen sind. An den Rippen 52 gleitet der Fixierkörper 60 entlang. Eine Außenfläche 53 des Grundkörpers 51 ist am Innenumfang der Lageraufnahme 48 angeordnet. Ein Flanschvorsprung 54 steht vor den Grundkörper 51 nach radial außen vor und stützt sich an der Stützfläche 47 des Kupplungsarmlagerelements 40 ab. Beispielsweise ist der Flanschvorsprung 54 neben einem Wandabschnitt des Widerlagerkörpers 80 angeordnet, der die Fixierwiderlagerfläche 83 und die Widerlagerfläche 86 bereitstellt (siehe Figur 3 und Figur 4).

Als Verdrehsicherung dienen der polygonale Innenumfang der Lageraufnahme 48 und dazu passend der polygonale Außenumfang bzw. die polygonale Außenfläche 53 des Gleitkörpers 50 sowie korrespondierend dazu der polygonale Außenumfang des Fixierkörpers 60.

An dem Innenumfang der Lageraufnahme 48 sind Eckbereiche 45a, 45b vorgesehen, an denen Eckbereiche 55a, 55b der Gleitbuchse oder des Gleitkörper 50 anliegen, wobei an den Eckbereichen 55a, 55b innenseitig wiederum Eckbereiche 65a, 65b des Fixierkörpers 60 angeordnet sind. Die Eckbereiche 45a, 45b, 55a, 55b, 65a, 65b sind als Abflachungen ausgestaltet, d.h. sie sind im Prinzip in einem Winkel von etwa 45° schräg zu Seitenflächen 56 des Gleitkörpers 50 und Seitenflächen 66 des Fixierkörpers 60.

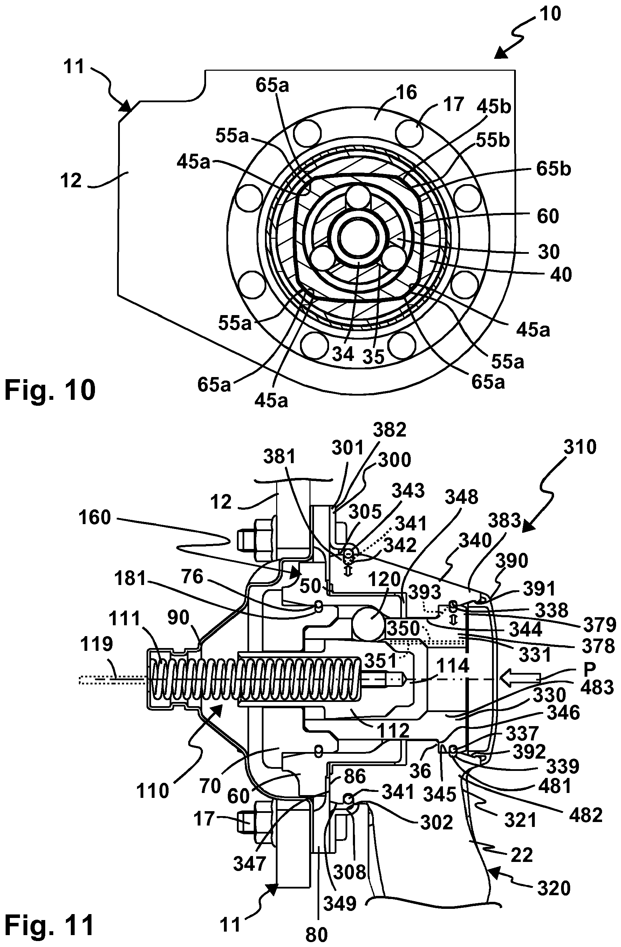

Im Vergleich zu den Eckbereichen 45b, 55b, 65b sind die Eckbereiche 45a, 55a, 65a geometrisch unterschiedlich, beispielsweise kürzer, sodass der Fixierkörper 60 nur in einer einzigen, vorbestimmten Drehwinkelposition mit dem Kupplungsarmlagerelement 40 verbunden werden kann, siehe dazu Figur 10.

Die Kombination aus Fixierkörper 60 und Lösekörper 70 kammert den Antriebskörper 112 ein. Der Einbau des Antriebskörpers 112 in einen vom Fixierkörper 60 und Lösekörper 70 begrenzten Aufnahmeraum 168 gestaltet sich gleichwohl sehr einfach und bequem. Der Antriebskörper 112 ist nicht direkt in dem Aufnahmeraum 168 aufgenommen, sondern im Führungskörper 30, der seinerseits wiederum in dem Aufnahmeraum 168 angeordnet ist.

Der Fixierkörper 60 und der Lösekörper 70 sind anhand von Befestigungsmitteln 180 fest miteinander verbunden. Die Befestigungsmittel sind vorliegend als Rastmittel ausgestaltet, die miteinander in Eingriff gelangen, wenn der Fixierkörper 60 und der Lösekörper 70 aneinander gesteckt werden. Beispielsweise ist am Fixierkörper 60 eine Steckaufnahme 64 vorgesehen, in die ein Steckvorsprung 72 des Lösebetätigungskörpers 70 eingreift.

Der Steckvorsprung 72 ist beispielsweise von einem Grundkörper 71 des Lösekörpers 70 gebildet, vor den seitlich ein Flanschabschnitt 73 absteht. Der Flanschabschnitt 73 stützt sich beispielsweise an dem Fixiervorsprung 63 des Fixierkörpers 60, der ebenfalls als Flansch ausgestaltet ist, ab.

Die Befestigungsmittel 180 sind am Steckvorsprung 72 und der Steckaufnahme 64 vorgesehen. Die Befestigungsmittel 180 weisen beispielsweise Rastmittel oder Rastanordnung 181 auf.

Die Befestigungsmittel 180 umfassen beispielsweise eine Nut 68 am Innenumfang der Steckaufnahme 64, die einer Nut 78 am Außenumfang des Steckvorsprungs 72 gegenüber liegt, wenn der Steckvorsprung 72 vollständig in die Steckaufnahme 64 eingesteckt ist und mithin der Flanschabschnitt 73 am Flanschabschnitt oder Fixiervorsprung 63 des Fixierkörpers 60 anschlägt. Die Montage gestaltet sich insbesondere deshalb sehr einfach, weil in die Nut 78 schon vor dem Einstecken des Steckvorsprungs 72 in die Steckaufnahme 64 ein Sprengring 76 eingesetzt wird, der beim Einstecken des Steckvorsprungs 72 in die Steckaufnahme 64 durch eine Verdrängerschräge 169 an der Einstecköffnung der Steckaufnahme 64 in die Nut 78 hinein verdrängt wird und dann, wenn die Nut 78 und die Nut 68 einander gegenüberliegen, sich wieder entspannt, insbesondere aufweitet, um dann in beide Nuten 68, 78 einzugreifen. Somit bildet der Sprengring 76 ein Rastmittel, das in die Rastaufnahmen in Gestalt der Nuten 68, 78 rastend eingreift. Die beiden Körper, nämlich der Fixierkörper 60 und der Lösekörper 70, sind fest und untrennbar miteinander verbunden.

Der Sprengring 76 besteht beispielsweise in an sich bekannter Weise aus einem Federstahl. Eine Öffnung 77 des Sprengringes 76, der also insgesamt zwar im Wesentlichen kreisrund ist, jedoch nicht komplett ringförmig geschlossen ist, ermöglicht es, dass sich der Sprengring 76 in die Nut 78 hinein verdrängen lässt.

Durch die Rastanordnung 181 sind der Fixierkörper 60, mithin also eine Lagerkomponente 182, und der Lösekörper 70, also ein weiteres Bauteil 183, miteinander verbunden. Das Bauteil 183 ist beispielsweise ein Bestandteil der Fixiereinrichtung 160. Der Lösekörper 70, also das Bauteil 183, ist nicht durch beim Fahrbetrieb der Anhängekupplung 10 auftretende Kräfte belastet, sondern lediglich beim Lösen Fixiereinrichtung 160 mit Kraft beansprucht. Somit wirken keine Kräfte im Sinne eines Lösens der Rastanordnung 181 wirkende Kräfte beim Fahrbetrieb, d.h. bei angekuppeltem Anhänger, auf die Rastanordnung 181 ein.

Ohne weiteres wäre es aber auch denkbar, dass beispielsweise am Steckvorsprung 72 und der Steckaufnahme 64 mindestens eine Schraubkontur 176 vorgesehen ist, um die beiden Komponenten miteinander zu verschrauben. Alternativ oder ergänzend ist aber auch eine Verschraubung, Verklebung oder dergleichen des Lösekörpers 70 am Fixierkörper 60, beispielsweise im Bereich des Flanschabschnitts 73 oder auch an anderer Stelle möglich, beispielsweise anhand mindestens einer Schraube 276 und/ oder mindestens einer Verklebung 376.

Vorteilhaft ist der Fixierkörper 60, der ja im Prinzip bei der Nutzung der Anhängekupplung 10 die maximale Last tragen muss, aus einem härteren oder belastbaren Material als der Lösekörper 70. Während der Fixierkörper 60 beispielsweise aus Metall, insbesondere Stahl besteht, ist der Lösekörper 70 ohne weiteres auch in Kunststoff oder einem weniger belastbaren Material herstellbar. Der Lösekörper 70 wird nur aktiv, wenn die Fixiereinrichtung 160 in die Lösestellung L verstellt wird, wozu deutlich kleinere Kräfte als für die Verriegelung oder Fixierung des Kupplungsarms 20 am Halter 11 für den Fahrbetrieb notwendig sind.

Das im Zusammenhang mit dem Fixierkörper 60 und dem Lösekörper 70 dargestellte Verbindungsprinzip mit einer Verrastung ließe sich ohne weiteres auch beispielsweise für die Verbindung zwischen Lagerkörpern einer erfindungsgemäßen Anhängekupplung realisieren. So ist es beispielsweise denkbar, dass ein Lagerkörper in der Gestalt des Lagerkörpers 100 anhand einer Sprengring-Anordnung mit dem ihn tragenden Lagerkörper verbunden wird.

Der Lösekörper 70 kann Verstärkungen aufweisen, beispielsweise in Gestalt von Rippen 75.

Am Lösekörper 70 ist weiterhin eine Durchtrittsöffnung 74 vorgesehen, durch die der Bolzenabschnitt 118 des Antriebskörpers 112 vor den Aufnahmeraum 168 vorsteht.

Die Durchtrittsöffnung 74 kann einen größeren Durchmesser aufweisen, sodass eine beispielsweise vom Stützkörper 90 abstehende Führung, insbesondere eine Führungshülse, bis in den Aufnahmeraum 168 vorsteht und somit den Antriebskörper 112 führt. Der Antriebskörper 112 kann somit ohne weiteres relativ zum Halter 11 verdrehgesichert werden, was in der Praxis Vorteile mit sich bringt. Insbesondere verdrehen sich das Betätigungsorgan 119 und der Antriebskörper 112 relativ zueinander nicht.

Das innovative Lagerkonzept, das beim Ausführungsbeispiel realisiert ist, ermöglicht auch eine einfache Abdichtung des Schwenklagers 16.

Rückseitig ist das Schwenklager 16 beispielsweise im Wesentlichen durch den Stützkörper 90, der einen Deckel 98 ausbildet, abgestützt. Außer einer verhältnismäßig kleinen Durchtrittsöffnung am Stützkörper 90, die für das Betätigungsorgan 119 nötig ist, ist das System auf der Rückseite geschlossen (in Figur 3 und 4 links). Im Bereich des Lagers ist ebenfalls eine optimale Abdichtung möglich, die beispielsweise bei einem Schiebelager deutlich schwerer zu realisieren ist, beispielsweise durch ein außenseitiges, flexibles Schutzgehäuse. Eine Dichtungsanordnung 132 ist beispielsweise neben der Anordnung aus Lagernut 105 und Lagervorsprung 43 am Lagerabschnitt 49 angeordnet. Beispielsweise ist am Lagerabschnitt 49 eine Dichtungsnut 131 vorgesehen, in die eine Dichtung 130, beispielsweise ein O-Ring oder ein sonstiger Dichtungsring, eingesetzt ist. Die Dichtung 130 ist zwischen dem Lagerabschnitt 49 und dem Lagerkörper 100, insbesondere dessen Lagerabschnitt 106, angeordnet und sorgt so für eine optimale Abdichtung.

Bei einer in Figur 11 dargestellten Anhängekupplung 310 sind teilweise gleiche oder ähnliche Komponenten vorhanden wie bei der Anhängekupplung 10. Diese Komponenten sind mit denselben Bezugsziffern in der Zeichnung versehen und werden nachfolgend nicht nochmals erläutert. Vielmehr wird vollständig Bezug auf die vorherigen Erläuterungen genommen. Beispielsweise sind ein Fixierantrieb 110 mit einer Feder 111 sowie ein Betätigungsorgan 119 vorgesehen. Der Verriegelungsantrieb 110 dient beispielsweise zum Antreiben einer Fixiereinrichtung 160.

Die Anhängekupplung 310 hat beispielsweise einen Halter 11 mit einem Trägerelement 12, an dem der bereits erläuterte Stützkörper 90 vorgesehen ist.

Das bereits im Zusammenhang mit dem Fixierkörper 60 und dem Lösekörper 70, die bei der Anhängekupplung 310 auch vorhanden sind, erläuterte Befestigungsprinzip mit einer Verrastung, beispielsweise mit dem Sprengring 76, ist bei der Anhängekupplung 310 konsequent bei anderen Komponenten realisiert, was insgesamt die Montage der Anhängekupplung 310 sehr einfach macht.

Ein ähnlich wie der Kupplungsarm 20 aufgebauter Kupplungsarm 320 der Anhängekupplung 310 weist ein integrales Kupplungsarmlagerelement 340 auf. Das Kupplungsarmlagerelement 340 ist beispielsweise von einem Kopf 321 des Kupplungsarms 320 gebildet oder mit diesem Kopf 321 einstückig.

Das Kupplungsarmlagerelement 340 oder der Kopf 321 ist beispielsweise einstückig mit einem Armabschnitt, zum Beispiel dem Krümmungsabschnitt 22, des Kupplungsarms 320.

Das Kupplungsarmlagerelement 340 ist anhand einer Rastanordnung 381 mit dem Schwenklager 16 verbunden.

An einem Lagerabschnitt 349 des Kupplungsarmlagerelements 340, der im Bereich eines Lagerkörpers 300 vorgesehen ist, also beispielsweise in den Lagerkörper 300 eingreift, ist im Falle der Anhängekupplung 310 kein mit dem Kupplungsarmlagerelement 340 fest verbundener Lagervorsprung in der Art des Lagervorsprungs 43 vorgesehen, sondern ein Lagervorsprung 343, der als ein Rastelement ausgestaltet ist. Dieses Rastelement greift in seiner Raststellung in die Lagernut der fahrzeugseitigen Lagerung ein.

Beispielsweise ist an dem Lagerabschnitt 349 eine Nut 342 vorgesehen, in welche ein Rastelement in Gestalt eines Sprengringes 341 hinein verdrängbar ist. In diesem sozusagen komprimierten Zustand des Sprengringes 341 ist das Kupplungsarmlagerelement 340 mit seinem Lagerabschnitt 349 in den Innenraum des Lagerkörpers 300 hinein bewegbar, wobei sich anschließend wiederum der Spreng-ring oder das Rastelement 341 ausdehnt und den Lagervorsprung 343 ausbildet. Der Lagervorsprung 343 greift in eine Lagernut 305, beispielsweise eine Ringnut, des Lagerkörpers 300, ein.

Eine Tiefe der Nut 342 ist jedenfalls so ausgestaltet, dass das Rastelement oder der Sprengringes 341 so weit in die Nut 342 hinein verdrängbar ist, dass das Kupplungsarmlagerelement 340 in die Durchtrittsöffnung 302 des Lagerkörpers 300 einsteckbar ist.

Der Lagerkörper 300 ist ähnlich aufgebaut wie der Lagerkörper 100, hat also beispielsweise einen Montageflansch 301, der anhand der Schrauben 17 mit dem Trägerelement 12 verschraubbar ist.

Eine Querbreite der Nut 342 ist so beschaffen, dass der Sprengring 341, also das Rastelement, bezüglich der Schwenkachse S unverschieblich ist. Dies ist in Bezug auf eine Verschiebefestigkeit des Kupplungsarmlagerelements 340 bezüglich der Schwenkachse S vorteilhaft.

Zwar ist die Lagernut 305 in Bezug auf die Schwenkachse S breiter oder länger als eine Querbreite des Lagervorsprungs 343. Dennoch ist das Kupplungsarmlagerelement 340 in dem Schwenklager 16 zweckmäßigerweise bezüglich der Schwenkachse S unverschieblich aufgenommen.

Der Lagervorsprung 343 stützt sich an einer Lagerfläche 308 (entsprechend der Lagerfläche 108) seitlich an der Lagernut 305 ab und verhindert somit eine Bewegung des Kupplungsarmlagerelements 340 entlang der Schwenkachse S in einem Sinne von der Trägerplatte oder dem Trägerelement 12 weg.

In entgegengesetzter Richtung wirkt sozusagen als Verschiebesicherung eine Kupplungsarm-Stützfläche 347 des Kupplungsarmlagerelements 340. Die Kupplungsarm-Stützfläche 347 entspricht funktional der erläuterten Kupplungsarm-Stützfläche 47. Die Kupplungsarm-Stützfläche 347 stützt sich beispielsweise an der insbesondere planen Widerlagerfläche 86 des Widerlagerkörpers 80 ab.

Die Lagernut 305 wird also beispielsweise durch die Lagerfläche 308 und die Widerlagerfläche 86 seitlich begrenzt.

Der Lagerkörper 300 bildet beispielsweise eine Lagerkomponente 382, mit dem das Kupplungsarmlagerelement 340, also ein weiteres Bauteil 383 und/oder der Kupplungsarm 320, anhand der Rastanordnung 381 verbunden ist. Beim Fahrbetrieb der Anhängekupplung 310 ist jedoch diese Rastverbindung oder Rastanordnung 381 nicht oder allenfalls im Sinne einer Aufrechterhaltung der Verrastung durch bei dem Fahrbetrieb auftretende Kräfte belastet. Die entsprechenden Kraftverhältnisse sind im vorigen Absatz erläutert.

Auch die Montage des Kupplungsarmlagerelements 340 an einem Führungskörper 330, der prinzipiell dem Führungskörper 30 entspricht, gestaltet sich aufgrund eines nachfolgend erläuterten Verrastungskonzepts einfach. Das Kupplungsarmlagerelement 340 bildet eine Lagerkomponente 482, welche anhand einer Rastanordnung 481 mit dem Führungskörper 330, also einem weiteren Bauteil 483, verrastet ist. Man könnte den Führungskörper 330 auch als eine Lagerkomponente bezeichnen, an dem das Kupplungsarmlagerelement 340, mithin also der Kupplungsarm 320, befestigt ist.

Der Führungskörper 330 hat einen Kopf 331, der sich mit einer Stützschulter oder einem Stützanschlag 36 an einer Stufe 346 einer der Durchtrittsöffnung 44 grundsätzlich entsprechenden Durchtrittsöffnung 344 des Kupplungsarmlagerelements 340 abstützt. Der Kopf 331 greift beispielsweise in einen mit der Durchtrittsöffnung 344 fluchtenden und gegenüber dieser einen größeren Querschnitt aufweisenden Aufnahmebereich 345 ein. Zwischen diesem erweiterten Aufnahmebereich 345 und der Durchtrittsöffnung 344 ist die Stufe 346 ausgebildet. Der Kopf 331 bildet beispielsweise eine Hintergreifstruktur 378. Weiterhin bildet der Kopf 331 einen Längsanschlag 379 in Bezug auf eine Steckachse, entlang derer die Komponenten 330, 340 aneinander ansteckbar sind. Die Steckachse entspricht vorliegend der Schwenkachse S.

Der Führungskörper 330 greift in die Durchtrittsöffnung 344 und/oder den Aufnahmebereich 345 zweckmäßigerweise quer und/oder längs bezüglich der Schwenkachse S oder Steckachse formschlüssig ein. Beispielsweise ist die Durchtrittsöffnung 344 oder der Aufnahmebereich 345 mit einer entsprechenden Verdrehsicherungskontur 350, insbesondere einem polygonalen Querschnitt, ausgestaltet. Die Verdrehsicherungskontur 350 ist nur schematisch angedeutet und nimmt eine korrespondierende Verdrehsicherungskontur 351 des Führungskörpers 330 in Bezug auf die Steckachse oder Schwenkachse S verdrehsicher formschlüssig auf. Das entsprechende Konzept entspricht beispielsweise der Verdrehsicherung zwischen dem Gleitkörper 50 und dem Fixierkörper 60, welches anhand von Figur 10 erläutert ist.

Der Kupplungsarm 320 ist beim konkreten Ausführungsbeispiel in Bezug auf Axialkräfte längs und quer zur Schwenkachse S formschlüssig am Führungskörper 330 abgestützt, sodass dieser beispielsweise vom Fixierkörper 60 rückwirkende Kräfte auf den Kupplungsarm 320 übertragen kann.

Dadurch kann der Kupplungsarm 320 auch eine entsprechende Kraftübertragung auf den Fixierkörper 60 leisten. In Bezug auf die Schwenkachse S wirken die Stufe 346 und der Fixierkörper 60 gegensinnig im Sinne einer Verklemmung des Kupplungsarms 320 am Halter 11.

Somit sind die sozusagen beim Fahrbetrieb auftretenden großen Kräfte durch formschlüssig aneinander abgestützte und entsprechend belastbare Komponenten abgefangen.

Gleichwohl gestaltet sich die Montage des Kupplungsarmlagerelements 340 am Führungskörper 330 oder umgekehrt des Führungskörpers 330 am Kupplungsarmlagerelement 340 besonders einfach. Dieser wird nämlich von der in der Zeichnung vom Halter 11 entfernten Seite her entsprechend einem Pfeil P sozusagen in die Durchtrittsöffnung 344 eingesteckt, bis die Stufe 346 und der Stützanschlag 36 aneinander anschlagen. Der Stützanschlag 36 bildet beispielsweise einen Längsanschlag in Bezug auf die Steckbewegung oder Steckachsrichtung.

Eine Axialsicherung des Kupplungsarms 320 bezüglich des Führungskörpers 330 in Bezug auf die Steckachse, die beispielsweise der Schwenkachse S entspricht (bei der Darstellung gemäß der Zeichnung) realisiert eine Verrastung anhand eines Rastelements, beispielsweise eines Sprengringes 338, der in eine Nut 337 des Führungskörpers 330 hinein verdrängbar ist. Der Sprengring 338 und die Nut 337 bilden Bestandteile der Rastanordnung 481.

Wenn die Stufe 346 und der Stützanschlag 36 aneinander anschlagen, liegt der Sprengring 338 einer Nut 339 am Kupplungsarmlagerelement 340 gegenüber, sodass er sich ausdehnen kann. Das Rastelement oder der Sprengring 339 rastet dann in die Rastaufnahme in Gestalt der Nut 339 ein. Dabei greift der Sprengring 338 gleichzeitig in beide Nuten 337, 339 ein, sodass eine Axialsicherung des Kupplungsarms 320 am Führungskörper 330 bezüglich der Steckachse, hier zufällig der Schwenkachse S, realisiert ist.

Beispielsweise sind die Nuten 337, 339 an dem erweiterten Aufnahmebereich 345 und dem Kopf 331 angeordnet. Sie könnten aber auch beispielsweise im Bereich der Durchtrittsöffnung 344 vorgesehen sein.

Der Sprengring 338 gleitet beispielsweise an einer Schrägfläche 392 am Eingangsbereich der Durchtrittsöffnung 344 entlang, damit er leicht in die Nut 337 hinein verdrängbar ist. Bei diesem Ausführungsbeispiel wird der Sprengring 338 vorzugsweise am Führungskörper 330 vormontiert, sodass er an der Schrägfläche 392 entlang gleitet. Selbstverständlich wäre auch eine Vormontage beispielsweise am Kupplungsarmlagerelement 340 oder am Kupplungsarm 320 möglich. Dann ist es zweckmäßig, wenn eine Schrägfläche 393 zur Verdrängung des Sprengringes 338 am Kopf 331 des Führungskörpers 330 vorhanden ist.

Das Kupplungsarmlagerelement 340 weist eine Lageraufnahme 348 in der Art der Lageraufnahme 48 für den Fixierkörper 60 auf.

Der Aufnahmebereich 345 oder die Durchtrittsöffnung 344, jedenfalls die Einstecköffnung für den Führungskörper 330 am Kupplungsarm 320 ist zweckmäßigerweise durch einen Deckel 390 verschlossen. Der Deckel 390 greift beispielsweise mit mindestens einer Rastnase oder Hakennase 391 in eine zugeordnete Rastaufnahme oder Hakenaufnahme am Aufnahmebereich 345 ein.

## Patentansprüche

1. Anhängekupplung für ein Kraftfahrzeug (200) mit einem Kupplungsarm (20), wobei der Kupplungsarm (20; 320) an einem am Kraftfahrzeug (200) befestigten oder befestigbaren Halter (11) anhand eines Lagers, insbesondere eines Schwenklagers (16), zwischen einer Gebrauchsstellung (G) und einer Nichtgebrauchsstellung (N) beweglich, insbesondere schwenkbar, bezüglich mindestens einer Lagerachse gelagert ist, wobei der Kupplungsarm (20; 320) in der Gebrauchsstellung (G) zum Anhängen eines Anhängers oder Befestigen eines Lastenträgers weiter nach hinten vor ein Heck (202) des Kraftfahrzeugs (200) vorsteht als in der für einen Nichtgebrauch des Kupplungsarms (20; 320) vorgesehenen Nichtgebrauchsstellung (N), wobei das Lager eine am Halter (11) angeordnete Halterlageraufnahme (104) und ein den Kupplungsarm (20; 320) tragendes Kupplungsarmlagerelement (40; 340) aufweist, das an der Halterlageraufnahme (104) beweglich gelagert ist, wobei die Anhängekupplung (310) eine Fixiereinrichtung (160) zum ortsfesten Fixieren des Kupplungsarms am Halter (11) in der Gebrauchsstellung (G) und/oder der Nichtgebrauchsstellung (N) aufweist, wobei eine Lagerkomponente (182, 382, 482) des Lagers mit mindestens einem Bauteil (183, 383, 483), insbesondere einer zweiten Lagerkomponente (182, 382, 482) des Lagers oder dem Kupplungsarm (20; 320) oder einem Bauteil der Fixiereinrichtung (160), anhand einer Rastanordnung (181, 381, 481) verbunden ist, **dadurch gekennzeichnet, dass** das mindestens eine Bauteil (183, 383, 483), insbesondere der Kupplungsarm, an einer Halterkomponente des Halters (11) oder der Lagerkomponente (182, 382, 482) des Lagers, anhand einer Hintergreifstruktur (378) mit einer Kraftrichtung zu dem Halter (11) hin formschlüssig gehalten ist, wobei das Bauteil (183, 383, 483) an der Halterkomponente oder Lagerkomponente (182, 382, 482) entgegen der Kraftrichtung durch die Rastanordnung (181, 381, 481) gehalten ist.

2. Anhängekupplung nach Anspruch 1, **dadurch gekennzeichnet, dass** die Lagerkomponente (182, 382, 482) und das mindestens eine Bauteil (183, 383, 483) drehbar und/oder verschieblich anhand der Rastanordnung (181, 381, 481) miteinander verbunden sind.

3. Anhängekupplung nach einem der vorhergehenden Ansprüche, **dadurch gekennzeichnet, dass** die Rastanordnung (181, 381, 481) das mindestens eine Bauteil (183, 383, 483), insbesondere das Kupplungsarmlagerelement (40; 340), an der Lagerkomponente (182, 382, 482), insbesondere der Halterlageraufnahme (104), bezüglich Lagerachse, insbesondere der Schwenkachse (S), verschiebefest hält oder einen Verschiebeweg des mindestens einen Bauteils (183, 383, 483) und Lagerkomponente (182, 382, 482) bezüglich der Lagerachse begrenzt.

4. Anhängekupplung nach Anspruch 1 oder 2, **dadurch gekennzeichnet, dass** das Kupplungsarmlagerelement (340) an der Halterlageraufnahme (104) anhand der Rastanordnung (181, 381, 481) gehalten ist, wobei das Kupplungsarmlagerelement (40; 340) und die Halterlageraufnahme (104) die Lagerkomponente (182, 382, 482) und das mindestens eine Bauteil (183, 383, 483) bilden.

5. Anhängekupplung nach einem der vorhergehenden Ansprüche, **dadurch gekennzeichnet, dass** die Rastanordnung (181, 381, 481) mindestens einen Sprengring (338) und/oder mindestens einen Rastvorsprung und mindestens eine Rastaufnahme umfasst, in die der Rastvorsprung eingreift.

6. Anhängekupplung nach Anspruch 5, **dadurch gekennzeichnet, dass** der mindestens eine Rastvorsprung einen Lagervorsprung bildet und die mindestens eine Rastaufnahme eine Lageraufnahme bildet oder an einer Lageraufnahme angeordnet ist und/oder dass der Rastvorsprung einen Sprengring (338) umfasst oder durch einen Sprengring (338) gebildet ist.

7. Anhängekupplung nach einem der vorhergehenden Ansprüche, **dadurch gekennzeichnet, dass** die Lagerkomponente (182, 382, 482) und das mindestens eine Bauteil (183, 383, 483) entlang einer Steckachse zur Verrastung der Rastanordnung (181, 381, 481) aneinander montierbar sind, wobei zweckmäßigerweise zwischen der Lagerkomponente (182, 382, 482) und dem mindestens einen Bauteil (183, 383, 483) Verdrehsicherungskonturen (350, 351) zum verdrehsicheren Halten der Lagerkomponente (182, 382, 482) und des mindestens einen Bauteils (183, 383, 483) quer zu der Steckachse vorhanden sind und/oder wobei vorteilhaft mindestens eine, insbesondere an der Lagerkomponente (182, 382, 482) oder dem mindestens einen Bauteil (183, 383, 483) angeordnete, Schrägfläche zur Betätigung der Rastanordnung (181, 381, 481) in Richtung einer Rast-Lösestellung beim Aneinanderstecken der Lagerkomponente (182, 382, 482) und des mindestens einen Bauteils (183, 383, 483) vorgesehen sind und/oder wobei vorteilhaft an der Lagerkomponente (182, 382, 482) und dem mindestens einen Bauteil (183, 383, 483) bezüglich der Steckachse zusätzlich zu der Rastanordnung (181, 381, 481) Längsanschläge (379) angeordnet sind, die bei verrasteter Rastanordnung (181, 381, 481) aneinander anliegen.

8. Anhängekupplung nach einem der vorhergehenden Ansprüche, **dadurch gekennzeichnet, dass** sie mindestens eine, insbesondere an der Lagerkomponente (182, 382, 482) oder dem mindestens einen Bauteil (183, 383, 483) angeordnete, Schrägfläche zur Betätigung der Rastanordnung (181, 381, 481) in Richtung einer Rast-Lösestellung aufweist, wenn die Lagerkomponente (182, 382, 482) und das mindestens eine Bauteil (183, 383, 483), insbesondere Kupplungsarmlagerelement und die Halterlageraufnahme, bezüglich der mindestens einen Lagerachse, relativ zueinander bewegt werden, um das Lagerelement und das mindestens eine Bauteil (183, 383, 483) aneinander zu montieren.

9. Anhängekupplung nach einem der vorhergehenden Ansprüche, **dadurch gekennzeichnet, dass** die Fixiereinrichtung (160) den Kupplungsarm mit dem Halter (11) in einer Fixierstellung anhand mindestens einer Fixierkraft fixiert, wobei die Rastanordnung (181, 381, 481) durch die mindestens eine Fixierkraft in der Fixierstellung unbelastet ist oder die mindestens eine Fixierkraft die Lagerkomponente (182, 382, 482) und das mindestens eine Bauteil (183, 383, 483) nicht in einem Sinne eines Lösens der Rastanordnung (181, 381, 481) belastet.

10. Anhängekupplung nach einem der vorhergehenden Ansprüche, **dadurch gekennzeichnet, dass** die Rastanordnung (181, 381, 481) von allen Fixierkräften der Fixiereinrichtung (160) zum ortsfesten Fixieren des Kupplungsarms am Halter (11) frei ist oder dass die Rastanordnung (181, 381, 481) durch die Fixierkräfte oder mindestens eine der Fixierkräfte in einem Sinne des ortsfesten Fixierens des Kupplungsarms an dem Halter (11) belastet ist.

11. Anhängekupplung nach einem der vorhergehenden Ansprüche, **dadurch gekennzeichnet, dass** mindestens zwei Bauteil-Paarungen oder sämtliche Bauteil-Paarungen, die zur Montage des Kupplungsarms (20; 320) an dem Lager und/oder zum Montieren der beweglichen Komponenten des Lagers erforderlich sind, anhand von Rastanordnungen (181, 381, 481) miteinander verbunden sind.

12. Anhängekupplung nach einem der vorhergehenden Ansprüche oder dem Oberbegriff des Anspruchs 1, **dadurch gekennzeichnet, dass** mehrere oder sämtliche beweglichen Komponenten der Anhängekupplung (310) anhand von Rastanordnungen (181, 381, 481) miteinander verrastet sind, wobei in Bezug auf beim Fahrbetrieb der Anhängekupplung (310) auftretende Kräfte jeweils nicht rastende, formschlüssig haltende Hintergreifstrukturen (378) oder Stützstrukturen in Eingriff miteinander sind

13. Anhängekupplung nach einem der vorhergehenden Ansprüche, **dadurch gekennzeichnet, dass** die Lagerkomponente (182, 382, 482) an dem Halter (11) anhand der Rastanordnung (181, 381, 481), insbesondere anhand eines Sprengringes (338) der Rastanordnung (181, 381, 481), drehbar und/oder verschieblich gelagert ist.

14. Anhängekupplung nach einem der vorhergehenden Ansprüche, **dadurch gekennzeichnet, dass** die Hintergreifstruktur (378) mindestens einen im Querschnitt L-förmigen, T-förmigen Hintergreifvorsprung und/oder einen insbesondere pilzartigen Kopf der Halterkomponente oder der Lagerkomponente (182, 382, 482) umfasst und/oder dass die Halterkomponente einen Bestandteil einer Fixiereinrichtung (160) der Anhängekupplung (310) bildet.

## Claims

1. Trailer coupling for a motor vehicle (200) with a coupling arm (20), wherein the coupling arm (20; 320) is movably mounted , in particular pivotably, with the aid of a swivel bearing (16) and relative to at least one bearing axis, on a holder (11) which is or may be attached to the motor vehicle (200), between a position of use (G) and an inoperative position (N), wherein the coupling arm (20; 320) in the position of use (G) extends further back beyond a rear section (202) of the motor vehicle (200) for attaching a trailer or mounting a load carrier than in the inoperative position (N) provided for when the coupling arm (20; 320) is not in use, wherein the bearing has a holder bearing location (104) provided on the holder (11) and a coupling arm bearing element (40; 340) carrying the coupling arm (20; 320) and mounted movably on the holder bearing location (104), wherein the trailer coupling (310) has a fixing device (160) for the immovable fixing of the coupling arm to the holder (11) in the position of use (G) and/or the inoperative position (N), wherein a bearing component (182, 382, 482) of the bearing is connected to at least one component (183, 383, 483), in particular a second bearing component (182, 382, 482) of the bearing or the coupling arm (20; 320) or a component of the fixing device (160), with the aid of a latching arrangement (181, 381, 481), **characterised in that** the component or components (183, 383, 483), in particular the coupling arm , is or are held positively on a holder component of the holder (11) or the bearing component (182, 382, 482) of the bearing with the aid of a rear-engaging structure (378) with a force direction towards the holder (11), wherein the component (183, 383, 483) is held on the holder component or bearing component (182, 382, 482) against the direction of force by the latching arrangement (181, 381, 481)..

2. Trailer coupling according to claim 1, **characterised in that** the bearing component (182, 382, 482) and the component or components (183, 383, 483) are connected to one another rotatably and/or movably with the aid of the latching arrangement (181, 381, 481).

3. Trailer coupling according to any of the preceding claims, **characterised in that** the latching arrangement (181, 381, 481) holds the component or components (183, 383, 483), in particular the coupling arm bearing element (40; 340), non-displaceably to the bearing component (182, 382, 482), in particular the holder bearing location (104), relative to the bearing axis, in particular the swivel axis (S), or limits a displacement path of the component or components (183, 383, 483) and the bearing component (182, 382, 482) relative to the bearing axis.

4. Trailer coupling according to claim 1 or 2, **characterised in that** the coupling arm bearing element (340) is held to the holder bearing location (104) with the aid of the latching arrangement (181, 381, 481), wherein the coupling arm bearing element (40; 340) and the holder bearing location (104) form the bearing component (182, 382, 482) and the component or components (183, 383, 483).

5. Trailer coupling according to any of the preceding claims, **characterised in that** the latching arrangement (181, 381, 481) comprises at least one snap ring (338) and/or at least one latching projection and at least one latching location in which the latching projection engages.

6. Trailer coupling according to claim 5, **characterised in that** the latching projection or projections forms or form a bearing projection and the latching location or locations forms or form a bearing location or is or are arranged on a bearing location, and/or that the latching projection includes a snap ring (338) or is formed by a snap ring (338).

7. Trailer coupling according to any of the preceding claims, **characterised in that** the bearing component (182, 382, 482) and the component or components (183, 383, 483) may be fitted to one another along an insertion axis to engage the latching arrangement (181, 381, 481) wherein expediently, between the bearing component (182, 382, 482) and the component or components (183, 383, 483), anti-twist-lock contours (350, 351) are provided transversely to the insertion axis for anti-twist holding of the bearing component (182, 382, 482) and the component or components (183, 383, 483), and/or wherein advantageously at least one inclined surface is provided, in particular on the bearing component (182, 382, 482) or the component or components (183, 383, 483), to actuate the latching arrangement (181, 381, 481) in the direction of a latching release position on putting together of the bearing component (182, 382, 482) and the component or components (183, 383, 483), and/or wherein advantageously longitudinal stops (379) additional to the latching arrangement (181, 381, 481) are provided on the bearing component (182, 382, 482) and the component or components (183, 383, 483), relative to the insertion axis and abutting one another with the latching arrangement (181, 381, 481) engaged.

8. Trailer coupling according to any of the preceding claims, **characterised in that** it has at least one inclined surface, provided in particular on the bearing component (182, 382, 482) and the component or components (183, 383, 483), for actuation of the latching arrangement (181, 381, 481) in the direction of a latching release position, when the bearing component (182, 382, 482) and the component or components (183, 383, 483), in particular the coupling arm bearing element and the holder bearing location, are moved relatively towards one another with reference to the bearing axis or axes, in order to fit together the bearing element and the component or components (183, 383, 483).

9. Trailer coupling according to any of the preceding claims, **characterised in that** the fixing device (160) fixes the coupling arm to the holder (11) in a fixing position with the aid of at least one fixing force, wherein the latching arrangement (181, 381, 481) is unloaded by the fixing force or forces in the fixing position or the fixing force or forces do not load the bearing component (182, 382, 482) and the component or components (183, 383, 483) for the purpose of releasing the latching arrangement (181, 381, 481).

10. Trailer coupling according to any of the preceding claims, **characterised in that** the latching arrangement (181, 381, 481) is free from all fixing forces of the fixing device (160) for the immovable fixing of the coupling arm to the holder (11), or that the latching arrangement (181, 381, 481) is loaded by the fixing forces or at least one of the fixing forces for the purpose of immovable fixing of the coupling arm to the holder (11).

11. Trailer coupling according to any of the preceding claims, **characterised in that** at least two component pairings or all component pairings which are necessary for fitting the coupling arm (20; 320) to the bearing and/or for fitting the movable components of the bearing are connected to one another with the aid of latching arrangements (181, 381, 481).

12. Trailer coupling according to any of the preceding claims or the preamble of claim 1, **characterised in that** several or all movable components of the trailer coupling (310) are engaged with one another with the aid of latching arrangements (181, 381, 481) wherein, in respect of forces occurring during operation of the trailer coupling (310), in each case non-latching, positively-held rear-engaging structures (378) or support structures engage with one another.

13. Trailer coupling according to any of the preceding claims, **characterised in that** the bearing component (182, 382, 482) is mounted on the holder (11) rotatably and/or movably with the aid of the latching arrangement (181, 381, 481), in particular with the aid of a snap ring (338) of the latching arrangement (181, 381, 481).

14. Trailer coupling according to any of the preceding claims, **characterised in that** the rear-engaging structure (378) includes at least one rear-engaging projection, L-shaped, T-shaped in cross-section, and/or a head, in particular mushroom-shaped, of the holder component or the bearing component (182, 382, 482), and/or that the holder component forms an integral part of a fixing device (160) of the trailer coupling (310).

## Revendications

1. Attelage de remorque pour un véhicule automobile (200) avec un bras d'attelage (20), dans lequel le bras d'attelage (20 ; 320) est monté de manière mobile, en particulier de manière à pouvoir pivoter, par rapport à au moins un axe de palier au niveau d'une console (11) fixée ou pouvant être fixée au niveau du véhicule automobile (200) à l'aide d'un palier, en particulier d'un palier de pivotement (16), entre une position d'utilisation (G) et une position de non-utilisation (N), dans lequel le bras d'attelage (20 ; 320) fait saillie, dans la position d'utilisation (G), pour accrocher une remorque ou pour fixer un support de charges, davantage vers l'arrière d'un hayon (202) du véhicule automobile (200) que dans la position de non-utilisation (N) prévue pour une non-utilisation du bras d'attelage (20 ; 320), dans lequel le palier présente un logement de montage de console (104) disposé au niveau de la console (11) et un élément de montage de bras d'attelage (30 ; 340) supportant le bras d'attelage (20 ; 320), qui est monté de manière mobile au niveau du logement de montage de console (104), dans lequel l'attelage de remorque (310) présente un dispositif de blocage (160) servant à bloquer de manière stationnaire le bras d'attelage au niveau de la console (11) dans la position d'utilisation (G) et/ou dans la position de non-utilisation (N), dans lequel une composante de palier (182, 382, 482) du palier est reliée à au moins un composant (183, 383, 483), en particulier une deuxième composante de palier (182, 382, 482) du palier ou au bras d'attelage (20 ; 320) ou à un composant du dispositif de blocage (160) à l'aide d'un ensemble d'enclenchement (181, 381, 481), **caractérisé en ce que** l'au moins un composant (183, 383, 483), en particulier le bras d'attelage, est maintenu par complémentarité de forme au niveau d'une composante de console de la console (11) ou de la composante de palier (182, 382, 482) du palier à l'aide d'une structure de prise par l'arrière (378) avec une direction de force vers la console (11), dans lequel le composant (183, 383, 483) est maintenu au niveau de la composante de console ou de la composante de palier (182, 382, 482) à l'encontre de la direction de force par l'ensemble d'enclenchement (181, 381, 481).

2. Attelage de remorque selon la revendication 1, **caractérisé en ce que** la composante de palier (182, 382, 482) et l'au moins un composant (183, 383, 483) sont reliés l'un à l'autre de manière à pouvoir tourner et/ou de manière à coulisser à l'aide de l'ensemble d'enclenchement (181, 381, 481).

3. Attelage de remorque selon l'une quelconque des revendications précédentes, **caractérisé en ce que** l'ensemble d'enclenchement (181, 381, 481) maintient de manière solidaire en coulissement l'au moins un composant (183, 383, 483), en particulier l'élément de montage de bras d'attelage (40 ; 340), au niveau de la composante de palier (182, 382, 482), en particulier du logement de montage de console (104), par rapport à l'axe de palier, en particulier à l'axe de pivotement (S), ou délimite une course de coulissement de l'au moins un composant (183, 383, 483) et de la composante de palier (182, 382, 482) par rapport à l'axe de palier.

4. Attelage de remorque selon la revendication 1 ou 2, **caractérisé en ce que** l'élément de montage de bras d'attelage (340) est maintenu au niveau du logement de montage de console (104) à l'aide de l'ensemble d'enclenchement (181, 381, 481), dans lequel l'élément de montage de bras d'attelage (40 ; 340) et le logement de montage de console (104) forment la composante de palier (182, 382, 482) et l'au moins un composant (183, 383, 483).

5. Attelage de remorque selon l'une quelconque des revendications précédentes, **caractérisé en ce que** l'ensemble d'enclenchement (181, 381, 481) comprend au moins un segment d'arrêt (338) et/ou au moins une saillie d'enclenchement et au moins un logement d'enclenchement, avec lequel la saillie d'enclenchement vient en prise.

6. Attelage de remorque selon la revendication 5, **caractérisé en ce que** l'au moins une saillie d'enclenchement forme une saillie de palier et l'au moins un logement d'enclenchement forme un logement de palier ou est disposé au niveau d'un logement de palier, et/ou que la saillie d'enclenchement comprend un segment d'arrêt (338) ou est formée par un segment d'arrêt (338).

7. Attelage de remorque selon l'une quelconque des revendications précédentes, **caractérisé en ce que** la composante de palier (182, 382, 482) et l'au moins un composant (183, 383, 483) peuvent être montés l'un au niveau de l'autre le long d'un axe d'enfichage aux fins de l'assemblage par enclenchement de l'ensemble d'enclenchement (181, 381, 481), dans lequel de manière opportune des contours anti-rotation (350, 351) servant à maintenir sans possibilité de rotation la composante de palier (182, 382, 482) et l'au moins un composant (183, 383, 483) de manière transversale par rapport à l'axe d'enfichage sont présents entre la composante de palier (182, 382, 482) et l'au moins un composant (183, 383, 483) et/ou dans lequel de manière avantageuse au moins une face oblique disposée en particulier au niveau de la composante de palier (182, 382, 482) ou de l'au moins un composant (183, 383, 483) est prévue pour actionner l'ensemble d'enclenchement (181, 381, 481) en direction d'une position d'enclenchement-déblocage lors de la juxtaposition par enfichage de la composante de palier (182, 382, 482) et de l'au moins un composant (183, 383, 483) et/ou dans lequel de manière avantageuse sont disposées au niveau de la composante de palier (182, 382, 482) et de l'au moins un composant (183, 383, 483) par rapport à l'axe d'enfichage en plus de l'ensemble d'enclenchement (181, 381, 481) des butées longitudinales (379), qui reposent les unes au niveau des autres dans le cas de l'ensemble d'enclenchement (181, 381, 481) assemblé par enclenchement.

8. Attelage de remorque selon l'une quelconque des revendications précédentes, **caractérisé en ce qu'**il présente au moins une surface oblique disposée en particulier au niveau de la composante de palier (182, 382, 482) ou de l'au moins un composant (183, 383, 483), servant à actionner l'ensemble d'enclenchement (181, 381, 481) en direction d'une position d'enclenchement-déblocage quand la composante de palier (182, 382, 482) et l'au moins un composant (183, 383, 483), en particulier l'élément de montage de bras d'attelage et le logement de montage de console, sont déplacés l'un par rapport à l'autre par rapport à l'au moins un axe de palier pour monter l'un au niveau de l'autre l'élément de palier et l'au moins un composant (183, 383, 483).

9. Attelage de remorque selon l'une quelconque des revendications précédentes, **caractérisé en ce que** le dispositif de blocage (160) bloque le bras d'attelage avec la console (11) dans une position de blocage à l'aide d'au moins une force de blocage, dans lequel l'ensemble d'enclenchement (181, 381, 481) n'est pas contraint par l'au moins une force de blocage dans la position de blocage ou l'au moins une force de blocage ne contraint pas la composante de palier (182, 382, 482) et l'au moins un composant (183, 383, 483) au sens d'un déblocage de l'ensemble d'enclenchement (181, 381, 481).

10. Attelage de remorque selon l'une quelconque des revendications précédentes, **caractérisé en ce que** l'ensemble d'enclenchement (181, 381, 481) est dépourvu de toutes les forces de blocage du dispositif de blocage (160) pour bloquer de manière stationnaire le bras d'attelage au niveau de la console (11), ou que l'ensemble d'enclenchement (181, 381, 481) est contraint par les forces de blocage ou au moins une des forces de blocage au sens du blocage stationnaire du bras d'attelage au niveau de la console (11).

11. Attelage de remorque selon l'une quelconque des revendications précédentes, **caractérisé en ce qu'**au moins deux appariements de composants ou tous les appariements de composants, qui sont requis aux fins du montage du bras d'attelage (20 ; 320) au niveau du palier et/ou pour monter les composantes mobiles du palier, sont reliés les uns aux autres à l'aide d'ensembles d'enclenchement (181, 381, 481).

12. Attelage de remorque selon l'une quelconque des revendications précédentes ou le préambule de la revendication 1, **caractérisé en ce que** plusieurs ou toutes les composantes mobiles de l'attelage de remorque (310) sont assemblées les unes aux autres par enclenchement à l'aide d'ensembles d'enclenchement (181, 381, 481), dans lequel des structures de prise par l'arrière (378) ou des structures d'appui de maintien par complémentarité de forme, sans enclenchement respectivement par rapport à des forces apparaissant lors du mode fonctionnement de déplacement de l'attelage de remorque (310), sont en prise les unes avec les autres.

13. Attelage de remorque selon l'une quelconque des revendications précédentes, **caractérisé en ce que** la composante de palier (182, 382, 482) est montée de manière à pouvoir tourner et/ou coulisser au niveau de la console (11) à l'aide de l'ensemble d'enclenchement (181, 381, 481), en particulier à l'aide d'un segment d'arrêt (338) de l'ensemble d'enclenchement (181, 381, 481).

14. Attelage de remorque selon l'une quelconque des revendications précédentes, **caractérisé en ce que** la structure de prise par l'arrière (378) comprend au moins une saillie de prise par l'arrière en forme de T, en forme de L dans la section transversale et/ou une tête en particulier de type champignon de la composante de console ou de la composante de palier (182, 382, 482), et/ou que la composante de console fait partie intégrante d'un dispositif de blocage (160) de l'attelage de remorque (310).
